(19) Europäisches Patentamt
European Patent Office
Office européen des brevets

(11) EP 0 352 068 B1

(12) EUROPEAN PATENT SPECIFICATION

(45) Date of publication and mention of the grant of the patent: **10.01.1996 Bulletin 1996/02**

(51) Int Cl.⁶: **G11B 7/24**

(21) Application number: **89307262.9**

(22) Date of filing: **18.07.1989**

# (54) Optical data recording medium

Medium für optische Aufzeichnung

Médium d'enregistrement optique

(84) Designated Contracting States:
**DE FR GB**

(30) Priority: **18.07.1988 JP 177138/88**
**23.07.1988 JP 182793/88**
**23.03.1989 JP 69265/89**

(43) Date of publication of application:
**24.01.1990 Bulletin 1990/04**

(73) Proprietor: **Hitachi Maxell Ltd.
Osaka-fu (JP)**

(72) Inventors:
- **Saito, Osamu**
  **Takatsuki-shi (JP)**
- **Kamezaki, Hisamitsu**
  **Yuki-gun, Ibaraki-ken (JP)**
- **Suenaga, Masashi**
  **Yuki-gun, Ibaraki-ken (JP)**
- **Nagai, Ryo**
  **Hirakata-shi (JP)**
- **Iuchi, Shinichiro**
  **Yuki-gun, Ibaraki-ken (JP)**
- **Watanabe, Hitoshi**
  **Yuki-gun, Ibaraki-ken (JP)**
- **Fujiwara, Hideo**
  **Kitasoma-gun, Ibaraki-ken (JP)**

(74) Representative:
**Cresswell, Thomas Anthony et al
London WC1R 5LX (GB)**

(56) References cited:
**EP-A- 0 039 094**
**EP-A- 0 042 307**
**EP-A- 0 181 941**
**EP-A- 0 264 274**
**EP-A- 0 304 050**
**DE-A- 3 622 256**
**US-A- 4 547 444**

- **PATENT ABSTRACTS OF JAPAN, vol. 11, no. 140 (M-586)(2587), 08 May 1987; & JP-A- 61 277 492**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 352 068 B1

## Description

The present invention relates to an optical data recording medium such as an optical disk, and more specifically to a recording medium including an organic dye.

Recently, development of an optical recording system mainly used for recording documents has been accelerated by progress in optical recording laser technology and cost reduction therein. This system is the recording and reproducing of data by irradiating a laser beam on an optical disk.

Optical data recording media used in this system include a write once type medium wherein a recording layer composed of a recording material containing an organic dye for a heat mode is formed on a substrate. This type of medium is advantageous in that (1) it can be made at low cost because the recording layer can be formed by a coating method and that (2) the recording density can be increased by making the intervals between pits narrower because a dye has a lower heat transfer rate than a thin metal layer.

There is commonly proposed an optical data recording medium which is provided with a recording layer composed of a material such as chalcogens metal or metal oxide. These materials, however, are disadvantageous in that they are rare and the manufacturing cost thereof is high.

Further, there are proposals for use of materials composed of various kinds of infrared absorbing organic dye in place of the above metals. For example, JP-A-61-243445 discloses a recording layer formed of a compound of formula

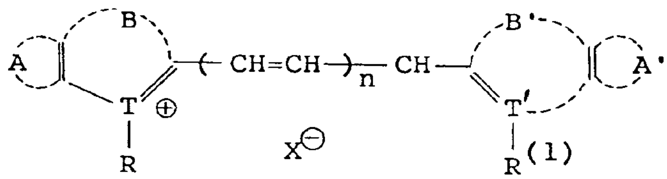

.

wherein T may be the same as or different from T' and each represents C, N, O or S;

A may be the same as or different from A' and each represents an aromatic ring optionally substituted with $\{CH_2\}nSO_3^{\ominus}$ wherein n represents an integer from 1 to 8 which forms a salt with a nickel ion;

B may be the same as or different from B' and each represents -H H- (ring-open), -O-, -S-,

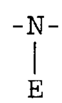

(wherein E represents a non-substituted or substituted $C_1$-$C_{18}$ alkyl group, or a non-substituted or substituted aromatic ring),

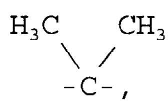

,

-Se-, or -CH=CH-;

R and $R^{(1)}$ exist when T is C or N, R is the same as or different from $R^{(1)}$ and each represents a non-substituted or substituted $C_1$-$C_{18}$ alkyl group or a non-substituted or substituted aromatic ring;

$X^{\ominus}$ represents halogen ion, peroxy halogenide ion, sulfonic acid ion, sulfate ion or acetate ion;

n represents an integer from 0 to 4; and

halogen, acetoxy, or benzoyloxy may exist on a methyne chain at the center of the molecule or the methyne chain may form a part of a ring.

This optical data recording medium, however, has a drawback in that it does not have sufficient durability to light and heat, and sufficient resistance to reading light. Further, the recording layer composed of the above materials does not have a high enough writing sensitivity and C/N (carrier/noise) value.

EP-A-304 050 which was published on 22nd February 1989 and forms part of the state of the art under Article 54 (3) EPC discloses an optical information recording medium for carrying out recording, readout or erasing with laser

beams. The medium comprises a support having carried thereon a cyanine dye containing a $PF_6^-$ anion.

In addition, in a conventional heat mode recording medium having a recording layer composed of a polymethyne organic dye, anionized quencher is added as a stabilizer or a protective layer is provided composed of polymer formed on a dye thin film experimentally to make the dye thin film unsusceptible to a change in chemical structure caused by heat. The method of adding the anionized quencher as the stabilizer has a problem of light absorption and reflection which causes recording ability to be lowered; this is because the dye ratio in the recording film is lowered by the decrease in the amount of dye and by the increase in other substances. The method of forming the protective layer composed of polymer has a problem in that enough pits are not formed since the protective film does not absorb light by itself and does not have a sufficient heat softening property. In conclusion, although both methods improve stability, they deteriorate recording ability which is very important to the recording medium, and thus these methods do not fundamentally solve the problems.

Examples of arrangements of recording media previously proposed include a thin film composed of polystyrene or the like formed on a single dye recording film as a protective layer (JP-A-58-36490) and a resin layer formed on a cyanine film (JP-A-59-203252).

An object of the present invention is to overcome the drawbacks of conventional technologies and to provide an optical data recording medium having excellent durability to light and heat, and excellent stability.

Another object of the present invention is to provide an optical data recording medium having excellent writing sensitivity and a high C/N value.

Accordingly, the invention provides an optical data recording medium comprising:

a recording layer comprising an organic dye of formula

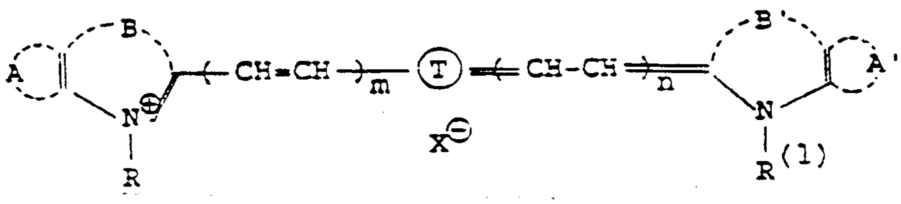
(1)

wherein

T is a linear, cyclic or polycyclic unsaturated group of 3 to 17 carbon atoms, optionally substituted by a halogen atom, a

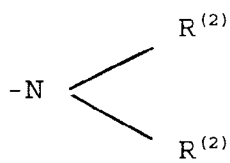

group, in which each $R^{(2)}$, which may be identical or different, is a linear chain or aromatic ring containing up to 6 carbon atoms, a methoxy group or a $OCOCH_3$ group, and wherein the group $-(CH=CH)_m-T=(CH-CH)=_n$ represents a completely conjugated polymethine chain;

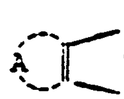 and 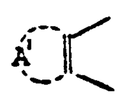 ,

which may be identical or different, each represent an aromatic group optionally substituted by -I, -Br, -Cl, $-C_nH_{2n+1}$, in which n is from 1 to 22, $-OCH_3$,

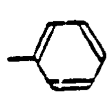 ,

$-NO_2$, $-OC_2H_5$ or

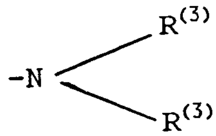

in which $R^{(3)}$ is a linear hydrocarbon chain or an aromatic ring;

B and B', which may be identical or different, each represent -O-, -S-, -Se-, -CH=CH- or

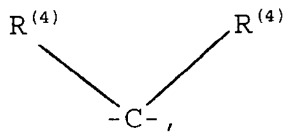

in which each $R^{(4)}$, which may be identical or different, represents a $C_1$-$C_4$ alkyl group;

R and $R^{(1)}$, which may be identical or different, each represents a $C_1$-$C_{22}$ alkyl group optionally substituted by a sulfonyl or carboxyl group;

$X^{\ominus}$ represents at least one of $CF_3SO_3^-$ and $SCN^-$ as an essential component, optionally in combination with $PF_6^-$; and

m and n, which may be identical or different, each represents an integer of from 0 to 3, such that $m + n \leq 3$.

An organic dye having $CF_6SO_3^-$ optionally in combination with $PF_6^-$ as the anion is stable to heat and light, and has excellent resistance as a recording layer by itself.

Further, an organic dye having $SCN^-$ as the anion has excellent writing sensitivity and a high C/N value.

Furthermore, since a polymerized dye obtained by copolymerizing an organic dye monomer with polymerizable molecules such as styrene, acrylic acid ester and methacrylic ester not only has a film forming function but also a light absorbing property and a reflecting property, a film composed of the dye functions as a protective film by itself as well as contributing to formation of pits having a very clear and sharp edge in a recording layer when the film is irradiated with a laser beam. Thus, an optical recording layer with excellent stability and recording characteristics is provided.

## BRIEF DESCRIPTION OF THE DRAWINGS

Figs 1 to 4 are enlarged cross sectional views of main parts of optical disks;

Fig. 5 is a diagram illustrative of typical examples of T in the general formula for the organic dyes used in the invention;

Fig. 6 is a diagram illustrative of typical examples of A and A' in the general formula;

Fig. 13 is a diagram illustrative of characteristic results from thermogravimetric analysis of organic dyes;

Figs. 14 and 17 are enlarged cross sectional views in the vicinity of a recording element in an optical disk;

Figs. 15, 16, 18 and 19 are enlarged cross sectional views in the vicinity of a recording hole in a hole type optical data recording medium;

Fig. 20 is a diagram explanatory of an energy reflection factor;

Fig. 21 is a diagram explanatory of composite light composed of light reflected at respective interfaces of an optical data recording medium composed of a substrate with a recording layer and a thin layer sequentially formed thereon;

Fig. 22 is a characteristic diagram illustrative of the change in energy reflection factor when the film thickness of the recording layer of the optical data recording medium shown in Fig. 21 is changed;

Fig. 23 is a diagram explanatory of composite light composed of light reflected at respective interfaces of an optical data recording medium composed of a substrate having only a recording layer formed thereon;

Fig. 24 is a characteristic diagram illustrative of the change in energy reflection factor when the film thickness of the recording layer of the optical data recording medium shown in Fig. 23 is changed;

Fig. 25 is a diagram explanatory of composite light composed of light reflected at respective interfaces of an optical data recording medium composed of a substrate having a recording layer and a thin layer sequentially formed thereon and a void defined at the intermediate portion of the recording layer;

Fig. 26 is a characteristic diagram illustrative of the change in energy reflection factor obtained when film thicknesses $d_2$ and $d_4$ in the recording layer are fixed and void thickness $d_3$ is sequentially changed in the optical data recording medium shown in Fig. 25;

Fig. 27 is a diagram explanatory of composite light composed of light reflected at respective interfaces of an optical data recording medium composed of a substrate having only a recording layer formed thereon and a void defined in the middle portion of the recording layer;

Fig. 28 is a characteristic diagram illustrative of the change in energy reflection factor obtained when film thicknesses $d_1$ and $d_3$ in a recording layer are fixed and void thickness $d_2$ is sequentially changed in the optical data recording medium shown in Fig. 27;

Fig. 29 is a schematic enlarged cross sectional view in the vicinity of a recording pit in an optical disk;

Fig. 30 through Fig. 42 are schematic enlarged cross sectional views in the vicinity of recording pits

Fig. 43 is an enlarged cross sectional view of an optical disk;

Figs. 44 and 45 are diagrams illustrative of examples of organic dyes used according to the present invention;

Figs. 46 and 47 are characteristic diagrams illustrative of the result of a recording/reproducing test, light stability test and reading light resistance test;

Fig. 48 is a characteristic diagram illustrative of the electrochemical decomposition voltage of organic dyes determined by an incremental voltage step method (IVSM);

Fig. 49 is a diagram illustrative of organic dyes used in the invention;

Fig. 50 is a diagram illustrative of comparative organic dyes; and

Figs. 51 and 52 are C/N diagrams for optical disks. 1 ... disk substrate, 3 ... recording layer, 8 ... thin layer, 10 ... void

Next, the present invention will be described with reference to the drawings.

Fig. 1 is a vertical cross sectional view of an air sandwich type optical disk, and Fig. 2 is an enlarged cross sectional view of a main part of this disk.

In Figs. 1 and 2, 1 designates a disk-shaped substrate, 2 designates an underlayer (refer to Fig. 2), 3 designates a recording layer, 4 designates a center hole, and 5 designates a ventilation hole including an air gap 6 formed inwardly of two bonded optical disks, and 7 designates a signal pattern such as a pregroove or prepit formed on the substrate 1.

A transparent material such as, for example, polycarbonate, polymethyl methacrylate, polymethyl pentene, epoxy resin or glass may be used for the disk substrate 1.

An autoxidation material such as, for example, polyvinyl nitrate may be used for the underlayer 2.

The recording layer 3 contains the organic dye.

The recording layer 3 can be formed on the disk substrate 1 through the underlayer 2 or omitting the underlayer by any method including a solution spin coating method, a vapor-deposition method, a Langmuir-Blodgett laminating method or a suitable combination of these methods.

While Fig. 5 shows typical examples of T in the general formula, any T other than the examples shown in Fig. 5 may be used.

In addition, while Fig. 6 shows typical examples of A and A' in the general formula, any A and A' other than the examples shown in Fig. 6 may be used.

When T in the above general formula is -CH=CH-CH= or

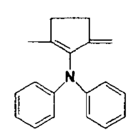

the heat resistance and recording sensitivity of the recording layer can be improved.

In addition, when A and A' are

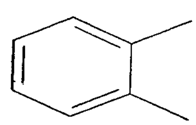

,

the reflection factor of the recording layer can be increased.

Further, when B and B' are

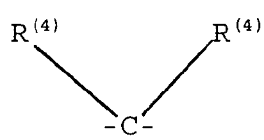

wherein $R^{(4)}$ is a $C_1$-$C_4$ alkyl group the solubility of the organic dye can be increased.

Furthermore, when R and R' are $C_2H_5$ or $C_3H_7$, the reflection factor of the recording layer can be increased.

In particular, when T is

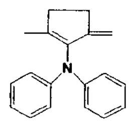

,

A and A' are

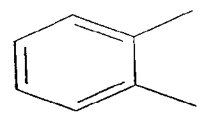

,

B and B' are

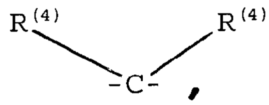

,

R and $R^{(1)}$ are $C_2H_5$ and X is $PF_6$, the dye has excellent heat resistance, recording sensitivity, reflection factor and solubility.

Dyes were synthesized which were composed of 1-methyl-2-[7-(1-methyl-3,3-dimethyl-2-indolinydene)-1,3,5-heptatrienyl]-3,3-dimethyl-indolium and iodide ion, perchlorate ion $ClO_4^-$, hexafluoro-phosphate ion $PF_6^-$ and $CF_3SO_3^-$ as anions. These dyes were subjected to a thermogravimetric analysis, and the result of the analysis is shown in Fig. 13, wherein the change of weight of the dye using $I^-$ is shown by a dotted line, the change of weight of the dye using $ClO_4^-$ is shown by a dot-dash-line, the change of weight of the dye using $CF_3SO_3^-$ is shown by a two-dot-and-dash-line and the change of weight of the dye using $PF_6^-$ is shown by a solid line.

Note that differential scanning calorimeter Model TAS-100 of Rigaku Denki Co., Ltd. was used as a measuring instrument, and samples were heated in nitrogen gas at a flow rate of 100 m/min. with a temperature increase rate of 20°C/min., and the temperatures at which the weights of the samples began to decrease were measured.

As apparent from the result of the analysis, the organic dye arranged with $I^-$ began to change weight at about 219°C, the organic dye arranged with $ClO_4^-$ began to change weight at about 235°C, the organic dye arranged with $CF_3SO_3^-$ began to change weight at about 250°C and the organic dye arranged with $PF_6^-$ began to change weight at about 256°C. Thus, the organic dye used according to this invention has an improved heat resistance compared with the organic dyes arranged with $I^-$ and $ClO_4^-$.

Figs. 3 and 4 are enlarged vertical cross sectional views of main parts of optical disks illustrating the invention. The embodiment shown in Fig. 3 has a thin layer 8 disposed on a recording layer 3 and the embodiment shown in Fig. 4 has a protective layer 9 disposed on the surface side of a disk substrate 1.

The following hydrophilic polymers can be use as a material for the thin layer 8.

1. polyvinyl alcohol
2. polyethylene oxide
3. polyacrylic acid
4. polystyrene-sodium-sulfonate
5. polyvinyl pyrrolidone
6. polymethacrylic acid
7. polypropylene glycol
8. methyl cellulose
9. polyvinyl nitrate
10. denaturated cellulose denaturated by ammonium salt

In the embodiment which uses polyvinyl alcohol (PVA) as the material of the thin film 8, a water solution containing the PVA may be spin coated to form the thin layer 8 having a film thickness of 120 nm.

The thin film 8 must have a thickness of 10 nm (0.01) µm or more. When the film thickness is less than 10 nm, pin holes are created and thus water and foreign materials penetrating through the pin holes are deposited on the, recording layer 3 and create errors. Further, when additional overcoat layer is formed on the thin layer, overcoat material penetrating

through the pin holes is mixed with the material of the recording layer 3 and deteriorates the characteristics thereof. On the other hand, the thin layer 8 may have any upper limit of thickness. When, however, the thin layer 8 is applied to an optical disk used for a CD, the thickness of the thin layer 3 is limited to 400 μm or less because the CD standard specifies a thickness of substrate of 1.2 ± 0.1 mm and a total thickness of disk of $1.2^{+0.3}_{-0.1}$ mm at present. The thickness of the thin layer 8 may of course be 400 μm or more when it is used for applications other than the CD. When PVA is spin coated, the film thickness of the thin layer 8 can be arbitrarily adjusted by selection of the rotational mode of substrate 1, the dropping conditions, the concentration of the solution and the atmosphere surrounding the turn table.

Incidentally, since the thin layer 8 is composed of a hydrophilic polymer such as PVA its moisture resistance is lowered. Hence, the thin layer 8 may be subjected to a cross-linking treatment or the like to provide it with water-proofing (moisture resistance) and heat resistance. More specifically, a cross-linking agent may be added to the water solution of the hydrophilic polymer, and after the thin layer 8 is formed, a cross-linking reaction may be effected by irradiation of light or heating. Alternatively, the thin layer 8 without addition of cross-linking agent may be heated and crystallized (when PVA is used it is denaturated) or subjected to other treatments so that it is made insoluble to water, water-proof and heat resistant.

Since, however, the above cross-linking reaction effected by light irradiation does not cause adverse thermal effects to the substrate 1 and the recording layer 3 and gives excellent operating performance, this embodiment may employ a technique wherein chrome is added as a cross-linking agent and the cross-linking reaction is effected in the thin layer 8 by irradiation of light.

Examples of a cross-linking means are as follows but any other means can be employed as necessary.

1. an addition of an element of, for example, copper, boron, aluminum, titanium, zirconium, tin, vanadium or chrome and a compound containing these elements as an inorganic cross-linking agent
2. acetal formation with aldehydes
3. aldehyde formation of hydroxyl group
4. addition of activated vinyl compound
5. etherification with epoxide compound
6. reaction of dicarboxylic acid with acid catalyst
7. addition of succinic acid and sulfuric acid
8. addition of triethylene glycol and methyl acrylate
9. blending of polyacrylic acid-methyl vinyl ether maleate copolymer

Returning to Fig. 4 again, UV curing resin, acrylic resin, epoxy resin, urethane resin or polyamide resin may be used as the protective layer 9.

The UV curing resin is preferable one of the above materials, since the amount of recording, productivity in mass production and simplicity of manufacturing are good, performance of the optical recording data medium can be further improved.

Next, the conditions for spin coating the recording layer by will be described.

When the recording layer is formed by spin coating, the results of various experiments prove it preferable that the concentration of the solution of the organic dye is 0.4 - 5.0 wt %. When this concentration exceeds 5.0 wt %, the film thickness of the recording layer is excessively thick, and recording elements such as pits or holes are not always successfully defined when recording is effected. On the other hand, when the concentration is less than 0.4 wt %, drawbacks such as pin holes are caused in the recording layer formed.

The rotational speed of the disk substrate is adjusted from 350 to 6500 rpm. When the rotational speed is less than 350 rpm, the centrifugal force is insufficient, and thus the drying speed of the inner circumference of the disk substrate is different from that of the outer circumference with the result of irregular film thickness, whereas when the rotational speed exceeds 6500 rpm, the film thickness is excessively thin, and thus a desired film thickness cannot be obtained.

Figs. 14 and 17 are enlarged cross sectional views in the vicinity of a recording element such as void or hole of the optical disk of the embodiment shown in Fig. 3. Note that the underlayer 2 is omitted in these figures.

The recording element shown in Fig. 14 has a typical shape defined by many kinds of materials with the thin portion of the recording layer 3 partly remaining on the side of the thin layer 8 and serving as a void 10. On the other hand, the recording element shown in Fig. 17 has a shape defined by a particular material with the portion of the recording element 3 on the side of the thin layer 8 substantially completely melted to form a hole shaped void 10. The recording element has different shapes depending on, for example, the material of the recording layer 3, the film thickness thereof, recording power and beam irradiation time.

While Fig. 14 and Fig. 17 describe cases wherein voids are formed in the recording layer, voids are not always formed in the recording layer depending on the irradiation conditions of the radiation beam, and the thin layer may be

expanded towards the side opposite to the substrate.

A portion where a sufficient amount of energy is irradiated is heated to a high temperature so that the dye recording layer is eliminated from the substrate and at the same time the thin layer melts to form a recording element with a protruding edge. At the time, the dye recording layer is completely eliminated from the substrate (Fig. 18) or slightly remains thereon (Fig. 15). In addition, when only the dye recording layer is formed and the thin layer is not formed, the results shown in Figs. 19 and 17 are obtained.

Next, an optical interference effect of an optical data recording medium will be described with reference to Figs. 20 and 21.

Fig. 20 is a diagram explanatory of an energy reflection factor R. Assuming that an amplitude reflection factor is represented by $r_{12}$ and an amplitude transmissivity is represented by $t_{12}$ when light travels from a medium 1 to a medium 2, the amplitude reflection factor $r_{12}$ and the amplitude transmissivity $t_{12}$ in vertical incidence are expressed by the following equation using reflection factors $n_1$, $n_2$ of the mediums 1 and 2.

$$r_{12} = \frac{n_2 - n_1}{n_1 + n_2} \qquad (1)$$

$$t_{12} = \frac{2n_1}{n_1 + n_2} \qquad (2)$$

In addition, the energy reflection ratio R is expressed by the following equation using the amplitude reflection factor r.

$$R = |r|^2 \qquad (3)$$

More specifically, assuming that an incident wave is represented by $a_0\cos\theta$ and a composite wave is represented by $a'\cos(\theta+\Delta)$, the energy reflection factor R is expressed by the following equation.

$$R = \left(\frac{a'}{a_0}\right)^2 \qquad (4)$$

Using the above, reflection factors in the following respective states were calculated.

Fig. 21 is a diagram explanatory of composite light composed of light reflected at respective interfaces of an optical data recording medium composed of a substrate with a recording medium composed of a substrate with a recording layer and a thin layer formed thereon sequentially. Respective symbols in Fig. 21 are designated as follows.

PC : a substrate of polycarbonate
dye : a recording layer of an organic dye
PVA : a thin layer of polyvinyl alcohol
air: air (air gap)
$n_0$: refraction factor of air ($n_0 = 1$)
$n_1$: refraction factor of PC ($n_1 = 1.6$)
$n_2$ : refraction factor of dye ($n_2 = 2.7$)
$n_3$: refraction factor of PVA ($n_3 = 1.5$)
$d_1$ : film thickness of PVA
$d_2$ : film thickness of dye
$A_1$ : light reflected at an interface between PC and dye
$A_2$ : light reflected at an interface between dye and PVA
$A_3$ : light reflected at an interface between PVA and air

Light reflected at the respective interfaces $A_1$, $A_2$, $A_3$ are expressed by the following equations.

$$A_1 = r_{12}\cos\theta \qquad (5)$$

$$A_3 = t_{12}r_{23}t_{21}\cos\left(\theta + \frac{4\pi n_2 d_2}{\lambda}\right) \qquad (6)$$

$$A_{13} = t_{12}t_{23}r_{30}t_{32}t_{21}\cos\left(\theta + \frac{4\pi(n_2 d_2 + n_3 d_1)}{\lambda}\right) \qquad (7)$$

Therefore, composite light $A_1 + A_2 + A_3$ composed of light $A_1$, $A_2$, $A_3$ reflected at the respective interfaces is obtained by the following equation.

$$(A_1 + A_2 + A_3) = r_{12}\cos\theta + t_{12}r_{23}t_{21}\cos\left(\theta + \frac{4\pi n_2 d_2}{\lambda}\right) +$$

$$t_{12}t_{23}r_{30}t_{32}t_{21}\cos\left(\theta + \frac{4\pi(n_2 d_2 + n_3 d_1)}{\lambda}\right) \quad (8)$$

This equation can be expressed by $a'\cos(\theta+\Delta)$.

The energy reflection factor R is determined by solving the right side of the equation (8) = $a'\cos(\theta+\Delta)$, representing a' by r, t, n, d, λ, inserting respective values in them, and squaring the resulted value of a' (because $a_0 = 1$).

Fig. 22 is a characteristic diagram illustrative of a change of the energy reflection factor R obtained when a film thickness $d_1$ of a PVA thin layer and a wavelength λ of incident light are fixed and a film thickness $d_2$ of a recording layer is sequentially changed in the optical data recording medium shown in Fig. 21.

Fig. 23 is a diagram explanatory of composite light composed of light reflected at respective interfaces of an optical data recording medium composed of a substrate having only a recording layer formed thereon.

The composite light ($A_1$ + $A_2$) in this case is expressed by the following equation like the case in Fig. 21.

$$(A_1 + A_2) = r_{12}\cos\theta + t_{12}r_{20}t_{21}\cos\left(\theta + \frac{4\pi n_2 d}{\lambda}\right)$$

$$= a'\cos(\theta+\Delta) \quad (9)$$

Fig. 24 is a characteristic diagram illustrative of a change of the energy reflection factor R obtained when a wavelength λ of incident light is fixed and a film thickness d of a recording layer is sequentially changed in the optical data recording medium shown in Fig. 23.

Fig. 25 is a diagram explanatory of composite light composed of light reflected at respective interfaces of an optical data recording medium composed of a substrate having a recording layer and a thin layer sequentially formed thereon and a void defined at the intermediate portion of the recording layer. Respective symbols in Fig. 25 are designated as follows.

$n_0$ : refraction factor of air and a void ($n_0 = 1$)
$d_2$ : thickness of the recording layer remaining between a PVA layer and the void
$d_3$ : void thickness
$d_4$ : thickness of the recording layer remaining between the void and a PC substrate
$A_2$ : light reflected at an interface between the recording layer having the film thickness of $d_4$ and the void
$A_3$ : light reflected at an interface between the void and the recording layer having the film thickness of $d_2$
$A_4$ : light reflected at an interface between the recording layer having the film thickness of $d_3$ and the PVA layer
$A_5$ : light reflected at an interface between the PVA layer and air

Light reflected at the respective interfaces $A_1$ - $A_5$ are expressed by the following equations.

$$A_1 = r_{12}\cos\theta \quad (10)$$

$$A_2 = t_{12}r_{20}t_{21}\cos\left(\theta + \frac{4\pi n_2 d_4}{\lambda}\right) \quad (11)$$

$$A_3 = t_{12}t_{20}r_{02}t_{02}t_{21}\cos\left(\theta + \frac{4\pi(n_2 d_4 + n_0 d_3)}{\lambda}\right) \quad (12)$$

$$A_4 = t_{12}t_{20}t_{02}r_{23}t_{20}t_{02}t_{21}\cos\left(\theta + \frac{4\pi(n_2 d_4 + n_0 d_3 + n_2 d_2)}{\lambda}\right) \quad (13)$$

$$A_5 = t_{12}t_{20}t_{02}t_{23}r_{30}t_{32}t_{20}t_{02}t_{21}$$

$$\cos\left(\theta + \frac{4\pi(n_2 d_4 + n_0 d_3 + n_2 d_2 + n_3 d_1)}{\lambda}\right) \quad (14)$$

Therefore, composite light ($A_1$ + $A_2$ + $A_3$ + $A_4$ + $A_5$) composed of light $A_1$ - $A_5$ reflected at the respective interfaces is obtained by the following equation (15).

$$(A_1 + A_2 + A_3 + A_4 + A_5) = r_{12}\cos\theta$$

$$+ t_{12}r_{20}t_{21}\cos\left(\theta+\frac{4\pi n_2 d_4}{\lambda}\right)$$

$$+t_{12}t_{20}r_{02}t_{02}t_{21}\cos\left(\theta+\frac{4\pi(n_2d_4+n_0d_3)}{\lambda}\right)$$

$$+t_{12}t_{20}r_{02}r_{23}t_{20}t_{02}t_{21}\cos\left(\theta+\frac{4\pi(n_2d_4+n_0d_3+n_2d_2)}{\lambda}\right)+t_{12}t_{20}t_{02}t_{23}r_{30}t_{32}t_{20}t_{02}t_{21}\cos\left(\theta+\frac{4\pi(n_2d_4+n_0d_3+n_2d_2+n_3d_1)}{\lambda}\right)=a'\cos(\theta+\Delta)$$

(15)

Fig. 26 is a characteristic diagram illustrative of a change of the energy reflection factor R obtained when a film thickness $d_1$ of a PVA thin layer, film thicknesses $d_2$ and $d_4$ in a recording layer and a wavelength $\lambda$ of incident light are fixed and a void thickness $d_3$ is sequentially changed in the optical data recording medium shown in Fig. 25. Note that when the values of $d_2$ and $d_4$ are decreased in Fig. 26, the energy reflection factor R moves in close to a curve shown by symbols ●, and when the values of $d_2$ and $d_4$ are increased, it moves in close to a curve shown by symbols ▲.

Fig. 27 is a diagram explanatory of composite light composed of light reflected at respective interfaces of an optical data recording medium composed of a substrate having a recording layer formed thereon and a void defined at the intermediate portion of the recording layer. Respective symbols in Fig. 27 are designated as follows.

$n_0$ : refraction factor of air and a void ($n_0 = 1$)
$d_1$ : thickness of the recording layer remaining between air and the void
$d_2$ : void thickness
$d_3$ : thickness of recording layer remaining between the void and a PC substrate
$A_2$ : light reflected at an interface between the recording layer having the film thickness of $d_3$ and the void
$A_3$ : light reflected at an interface between the void and the recording layer having the film thickness of $d_1$
$A_4$ : light reflected at an interface between the recording layer having the film thickness of $d_1$ and air

Light $A_1$ - $A_4$ reflected at the respective interfaces are expressed by the following equations.

$$A_1 = r_{12}\cos\theta \quad (16)$$

$$A_2 = t_{12}r_{20}t_{21}\cos\left(\theta+\frac{4\pi n_2 d_3}{\lambda}\right) \quad (17)$$

$$A_3 = t_{12}t_{20}r_{02}t_{02}t_{21}\cos\left(\theta+\frac{4\pi(n_2d_3+n_2d_2)}{\lambda}\right) \quad (18)$$

$$A_4 = t_{12}t_{20}t_{02}r_{20}t_{20}t_{02}t_{21}\cos\left(\theta+\frac{4\pi(n_2d_3+n_0d_2+n_2d_1)}{\lambda}\right) \quad (19)$$

Therefore, composite light ($A_1 + A_2 + A_3 + A_4$) composed of light $A_1$ - $A_4$ reflected at the respective interfaces is expressed by the following equation (20).

$$(A_1+A_2+A_3+A_4) = r_{12}\cos\theta$$

$$+ t_{12}r_{20}t_{21}\cos\left(\theta+\frac{4\pi n_2 d_3}{\lambda}\right)$$

$$+t_{12}t_{20}r_{02}t_{02}t_{21}\cos\left(\theta+\frac{4\pi(n_2d_3+n_2d_2)}{\lambda}\right)$$

$$+t_{12}t_{20}t_{02}r_{02}t_{20}t_{02}t_{21}\cos\left(\theta+\frac{4\pi(n_2d_3+n_0d_2+n_2d_1)}{\lambda}\right)$$

$$= a' \cos(\theta + \Delta) \qquad (20)$$

Fig. 28 is a characteristic diagram illustrative of a change of the energy reflection factor R obtained when film thicknesses $d_1$ and $d_3$ in a recording layer and a wavelength $\lambda$ of incident light are fixed and a void thickness $d_2$ is sequentially changed in the optical data recording medium shown in Fig. 27. Note that when the values of $d_1$ and $d_3$ are decreased in Fig. 28, the energy reflection factor R moves in close to a curve shown by symbols ●, and when the values of $d_1$ and $d_3$ are increased, it moves in close to a curve shown by symbols ▲.

A recording element is read by a difference between a reflection factor of an unrecorded portion and a reflection factor of a recorded element portion. Consequently, when a larger difference between the reflection factor of the unrecorded portion and the reflection factor of the recorded element portion is provided, a larger modulation degree is obtained. An optical data recording medium having a recording element defined according to the void shape shown in Figs. 25 and 27 can be provided with a larger difference between the reflection factor of the unrecorded portion and that of the recorded element portion larger than a difference between those of an optical data recording medium having a recording element defined according to a pit shape shown in Figs. 21 and 23. That is, a higher modulation degree can be obtained.

Note that the range of a film thickness of respective portions in Figs. 25 and 27 is as follows.

The film thickness of the respective portions in Fig. 25:

| | |
|---|---|
| $d_1$ (PVA) : | 1 nm - 10 µm |
| $d_2$ (dye) : | 1 nm - 5 µm |
| $d_3$ (void thickness) : | 1 nm - 5 µm |
| $d_4$ (dye) : | 1 nm - 5 µm |

The film thicknesses of the respective portions in Fig. 27:

| | |
|---|---|
| $d_1$ (dye) : | 1 nm - 5 µm |
| $d_2$ (void thickness) : | 1 nm - 5 µm |
| $d_3$ (dye) : | 1 nm - 5 µm |

Fig. 29 is an enlarged cross sectional view of another schematic example of a recording element. Shown in Fig. 29 is a fibriform 11 formed depending on the material and physical properties of the recording layer 3 and the irradiating conditions of a laser beam.

In addition, the void 10 is not always composed of a single bubble but may be composed of a collection of a plurality of or a multiplicity of bubbles.

Fig. 30 through Fig. 35 are schematic enlarged cross sectional views of recording elements of optical data recording media omitting underlayers.

In the case of Fig. 30, a portion of a recording layer 3 where a laser beam is irradiated disappears from the surface of a substrate 1 and the portion of a thin layer 8 corresponding to the disappeared portion is pushed upwardly to a substantially annular shape.

In the case of Fig. 31, while a portion of a thin layer 8 is pushed upwardly like the thin layer in Fig. 30, an annular projection 12 is defined around the portion pushed upwardly.

In the case of Fig. 32, while a portion of a recording layer 3 where a laser beam is irradiated disappears from the surface of a substrate 1, a thin layer 8 is not deformed.

In the case of Fig. 33, a portion of a recording layer 3 where a laser beam is irradiated disappears from the surface of a substrate 1 and an annular projection 13 is defined around the diappeared portion. On the other hand, a thin layer 8 is recessed towards the disappeared portion.

In the cases of Figs. 34 and 35, the material of a recording layer 3 is partly attached to the inner surface of a thin layer 8 again. While the recording layer 3' attached to the inner surface of the thin layer 8 is principally continuous with the recording layer 3, it is separated from the recording layer 3 in some cases.

Fig. 36 through Fig. 42 are enlarged cross sectional views of recording elements using an optical data recording medium provided with an underlayer 2.

Since the configurations except the underlayer 2 are the same as those shown in Fig. 30 through Fig. 35, further description thereof is omitted. In the embodiment shown in Fig. 41, while a recording layer 3' attached to layer 8 is coupled with a recording layer 3, in the embodiment shown in Fig. 42, the recording layer 3' attached to layer 8 is apart from the recording layer 3.

Fig. 43 is an enlarged cross sectional view of a main part of an optical disk. In this embodiment, thin layer 8a is

composed of a material capable of recording optical data by itself. Next, the arrangement of this thin layer 8a will be described.

A polymerisable monomer to which dye molecules having a chromophoric group may be added by esterification may be synthesized.

The polymerizable monomers which may be used here include:

(acrylic monomer)
  acrylic acid, acrylic ester, methacrylic acid and methacrylic ester
(styrene monomer)
  styrene, α-methyl styrene, divinyl benzene, chloro styrene, cyano styrene, amino styrene and hydroxy styrene
(acrylamide monomer)
  acrylamide, methacrylic amide and diacetone acrylamide
(fatty acid vinyl ester monomer)
  vinyl acetate and vinyl ester
(nitrile and isonitrile monomer)
  acrylonitrile, methacrylonitrile, adiponitrile, phthalonitrile and isonitrile
(vinyl ester monomer)
  alkyl vinyl ether
(halogenated olefine monomer)
  vinyl chloride, vinylidene chloride, vinyl bromide, vinyl fluoride and vinylidiene fluoride
(conjugated diene monomer)
  butadiene, isoprene, chloroprene, fluoroprene and cyanoprene
(N-vinyl compound monomer)
  vinyl cyanine
(olefinic monomer)
  ethylene, propylene and isobutylene

The following may be used as the radical polymerization initiator:

(azo initiator)
  azobis isobutylo nitrile
(peroxide initiator)
  benzoyl peroxide, di-tert-butyl peroxide and potassium persulfate
(water soluble redox initiator)
  cumene hydroperoxide and amine
(waterinsoluble redox initiator)
  hydroperoxide, benzoyl-peroxide, dimethyl aniline and cobalt naphthenate.

Further, when radiation-induced polymerization is carried out, a photochemical initiator such as an ultraviolet ray sensitizer or visible ray sensitizer is added.

Examples of the kinds of dye to be used are as follows: methine dye, polymethine dye, cyanine dye, carbocyanine dye, anthraquinone dye, azo dye, phthalocyanine dye, squarylium dye and azulenium dye.

In addition, the dye molecules may bond directly or through the following bonding groups to the above polymerizable monomer:
(R; hydrogen, alkyl group)
  -O-, -CO-, -COO-, -OCO-, $SO_2$-, -OCOO-, -NR-, -CONR-, -CONRCO-, -NRCO-, -S-, -$SO_2$NR and $RSO_2$-.

Methods by which a polymerizable monomer is bonded to a dye or makes a chain with a dye are:
(M; monomer, D; dye)

(1) an example of polymer of polymerizable monomer to which dye is bonded:

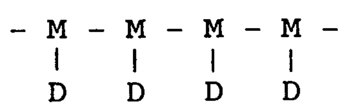

(2) an example wherein a monomer not bonded to a dye and a monomer bonded to the dye are polymerized simultaneously:

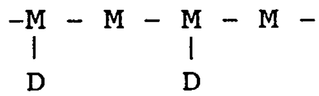

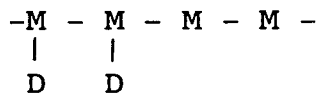

(3) an example of a polymer chain of a dye monomer and another monomer or a polymer chain including a polymerized dye portion therein:

-M-D-M-D-
-M-M-D-D-D-

(4) an example of a polymer chain including a polymerizable monomer bonding a dye, or a polymerized dye or a dye portion:

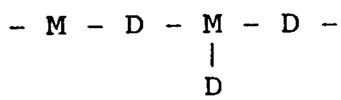

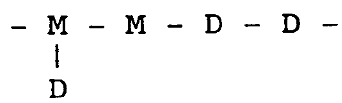

Note that the monomers are not limited to the same kind but different kinds of them may be used.

In addition, when a thin layer is formed on an optical data recording medium having a substrate, underlayer and recording layer arranged in this order, this thin layer may not greatly damage the sensitivity of the recording layer.

When the light absorbing spectrum of the dye used in these thin layers has a strong absorption to visible rays or ultraviolet rays, it is possible to improve a preserving deterioration as an optical data recording medium. In this case, however, a dye concentration in the dye polymer thin layer and the thickness of the thin layer is preferably in the range which does not greatly damage a C/N characteristic.

When the light absorbing spectrum of the dye used in the thin layer is similar to that of the recording layer, it is apparently admitted that recording elements having a clear edge can be formed by the irradiation of a laser beam and further stability to reading light is greatly improved by that the dye polymer thin layer is formed on the recording film, although the recording sensitivity is a little different depending on the dye concentration of the dye polymer used in the thin layer and the thickness thereof.

Polymerized monomers composed of an acrylic acid monomer or methacrylic acid monomer added with dye molecules having chromophore in the molecules by, e.g., esterification are, for example, as follows:

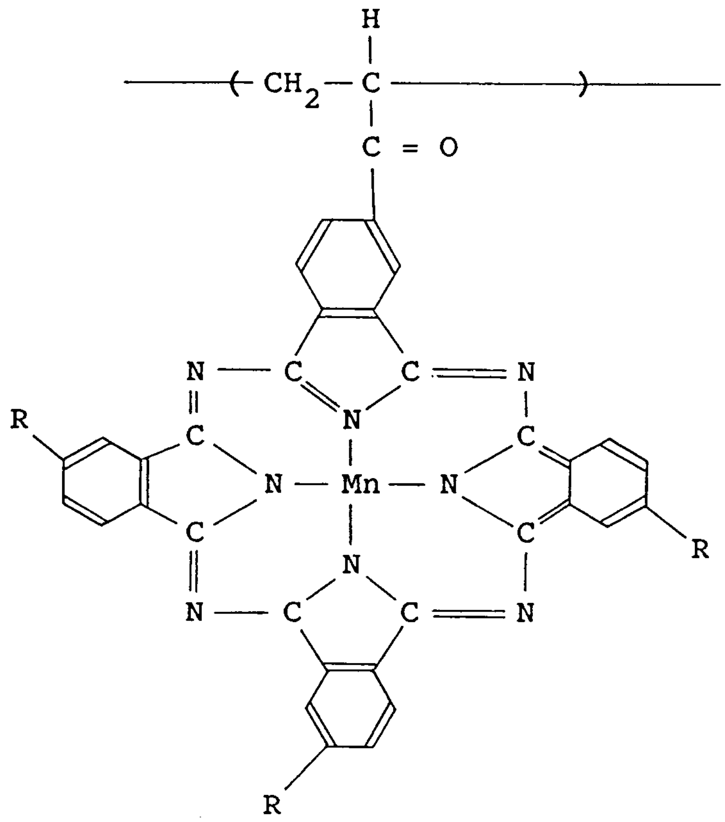

where R represents COOH, H, an alkyl group, acryloyl group, alkyl ester group, phenyl group, phenyl ester, those having COOH or H at the end thereof, alkoxy group In the case of this embodiment, R represents $OCOC_4H_9$.

The polymerizable monomer (A) obtained as described above is added with a polymerization initiator such as azobis isobutylo nitrile (AIBN) together with methyl acrylate (B) like a usual radical polymerization and heated in a solvent such as dimethyl sulfoxide (DMSO) to obtain a copolymer. In this case, the mol ratios of the above (A) and (B) are as shown below.

Table 1

| Sample No. | (A) : (B) |
|---|---|
| 1 | 1 : 100 |
| 2 | 3 : 100 |
| 3 | 10 : 100 |
| 4 | 20 : 100 |
| 5 | 30 : 100 |
| 6 | 40 : 100 |

A protective film was formed using these various solutions by spin coating.

A solution made by dissolving manganesephthalocyanine/acrylic acid methyl copolymer synthesized in advance in methyl isobutyl ketone (MIBK) was deposited on the surface of a recording layer to a thickness of 10 nm by spin coating to form an optical data recording medium having a total thickness of 70 nm.

When writing was effected to this medium by a semiconductor laser beam having a wavelength of 830 nm at an output of 7 mW, the samples Nos. 3 - 6 are provided with recording elements of which vicinity has a sharp configuration like a single dye film, although the samples Nos. 1 and 2 are provided with recording elements of which vicinity had a little blunt configuration.

With respect to light stability, degrees of fading were compared using a fademeter with the result that all of the samples had a faded grade smaller than that of a single manganese-PC film and then it is understood that stability was

improved.

On the other hand, a light absorbing property and a reflection factor were not lowered and recording/ reproducing characteristics remained at a high level.

When, however, a thickness of the thin layer is made to 10 nm or more, that is, as thick as about 50% of the thickness of the overall recording medium, the polymer used in the thin layer has preferably a higher ratio of dyestuff and it must be selected from samples Nos. 3 - 6 in the Table 1.

In addition, while the kind of the dye used for the polymerization is preferably the same as the kind of the single dye, a different kind of dye may be used as long it has λ max. of 830 nm in a light absorbing spectrum. Any combination of the dyes is applicable, when the combination can form recording elements which are disposed in a very close vicinity each other and have high performance in an overall characteristic.

(Comparative Example)

A dye to be used here was the same as that used in the embodiments and an optical data recording medium was made in such a manner that a recording layer was formed on a disk substrate like the embodiments and a thin film of 10 nm was formed thereon by applying a solution obtained by dissolving 1/2 sec. nitro cellulose in cyclohexanone.

When laser writing was effected to this example under the same conditions as the embodiments, the surface film of pits was in the state as if it was burst and its circumferential edge was considerably disarranged and only the result obtained was a bad C/N value, which proved that this comparative example could not be practically used.

Table 2 shows the change of reflection factors of the samples No. 1 - 6 and the comparative example at 830 nm before and after an acceleration test was carried out. Note that this acceleration test was effected to measure the reflection factors at 60°C and 90% RH after 1000 hours. The reflection factors were represented by the values measured by an integrating sphere.

Table 2

| Sample No. | Reflection factor (%) | |
|---|---|---|
| | Before acceleration test | After acceleration test |
| 1 | 27 | 25 |
| 2 | 27 | 26 |
| 3 | 27 | 26 |
| 4 | 28 | 26 |
| 5 | 30 | 29 |
| 6 | 30 | 29 |
| Comparative example | 27 | 22 |

As apparent from Table 2, sample nos. 1 - 6 in accordance with the invention have reflection factors which are less lowered and thus are excellent in stability.

Next, an embodiment in which the anion $X^{\ominus}$ in the organic dye is trifluoromethane sulfonate ion $CF_3SO_3^-$ will be described.

1% of various organic dyes shown in Figs. 44 and 45 (with respect to Ⓣ and A in Tables, refer to Fig. 6) were dissolved in 1,2-dichloro ethane and this solution was applied to methyl methacrylate substrates by spin coating to form recording layers of 60 nm.

A water solution containing 4% of polyvinyl alcohol added with ammonium dichromate (cross-linking agent) was applied to the recording layers by spin coating to form a film of 60 nm. This film was dried and subjected to a cross-linking treatment by being irradiated with ultraviolet rays and formed into a thin layer, whereby optical disks were made.

A recording/reproducing test, light stability test, and reading light resistance test were carried out on the respective optical disks and the results thereof are shown in Figs. 46 and 47.

The recording/reproducing test measurements were carried out using a laser beam of 830 nm with a writing power of 8 mW, a pulse width of 100 ns, a linear velocity of 6 m/sec. and a reading out power of 1 mW to determine C/N values.

The light stability test was effected using a fedometer of Atlas Co., Ltd. to compare fading properties caused by a xenon arc beam. Note that a spectrometer Model UV IDEC-430B of Nippon Bunko Co., Ltd. was used to determine transmittance at a wavelength of 830 nm in 30 hours after exposure was effected using a xenon beam.

In the reading light resistance test, a laser beam of 830 nm was used and the number of reading times was measured until a signal could not be read when reading light of 0.5 mW was irradiated.

The dye of this embodiment contained $CF_3SO_3^-$ arranged as the anions thereof, and this dye was compared with a dye containing $ClO_4^-$. arranged as the anions thereof.

All of the C/N values in Figs. 46 and 47 are from 46 to 53 dB and are not inferior to those of the above comparative dye.

The light stability test shows that there are considerable differences caused by the different anions. The transmittance of the organic dye using $CF_3SO_3^-$ as anions is 19 - 27% after the fading test, whereas organic dyes using $I^-$ or $ClO_4^-$ as anions have their transmittance increased to 32 - 40% under the same test conditions and thus these organic dyes have a problem of light instability. There is a difference of 5 - 21% in transmittance between the embodiments in accordance with the invention and the comparative dyes after the fading test, and it is found that $CF_3SO_3^-$ is superior to $I^-$ or $ClO_4^-$ in light durability.

In the reading light resistance test, the organic dye of this embodiment has a number of reading times of 0.3 x $10^6$ - 3.0 x $10^6$ until a signal can not be read. On the other hand, the organic dye using I or $ClO_4^-$ has a number of reading times of 7.1 x $10^3$ - 6.1 x $10^4$, in the same test, and thus there is a difference of up to about two decimal places, which proves the superiority of this embodiment.

The result of the thermogravimetric analysis of the organic dye of the embodiment including $CF_3\ SO_3^-$ is shown by a two-dot-and-dash curve in Fig. 13. The temperatures at which thermal decomposition of the organic dyes containing the respective anions begins is read from Fig. 13 and summarized in Table 3.

Table 3

| Anions | Thermal decomposition start temp. (°C) |
|---|---|
| $I^-$ | 219 |
| $ClO_4^-$ | 235 |
| $CF_3SO_3^-$ | 250 |
| $PF_6^-$ | 256 |

As apparent from Table 3, it is found that the organic dyes containing $CF_3\ SO_3^-$ and $PF_6^-$ arranged as the anions thereof have a higher thermal decomposition start temperature than those containing $I^-$ and $ClO_4^-$ arranged as the anions thereof and thus have a superior heat resistance.

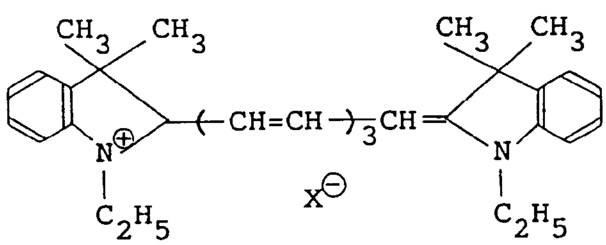

Organic dyes were made by synthesizing an indol type cyanine dye having the above chemical structure and arranging $CF_3SO_3^-$, $I^-$ or $ClO_4^-$ thereto as anions. Then, the electrochemical decomposition voltage of the respective organic dyes was measured by an incremental voltage step method (IVSM).

This measuring method was such that propylene carbonate solutions containing the respective dyes were added to a polypropylene cell and a gold electrode plate was disposed through a separator. These dye solutions had a concentration at which the dyes were saturated.

After the electrochemical cell arranged as described above was placed in an argon substituted bath and kept in a thermodynamics equilibrium state, a voltage V was increased by $\Delta V$ to make the cell in a charged state. This charged state was continued until the current I became $I = I_{min}$, and when $I = I_{min}$ was reached, the' voltage was further increased by $\Delta V$ to repeat the same process. This process was repeated until the voltage V reached $V_{max}$. With this method, the strength of bonding of the various anions of $CF_3SO_3^-$, $I^-$ and $ClO_4^-$ to the skeleton of the dye molecules can be measured with high accuracy.

As apparent from Fig. 48, the decomposition voltage of the organic dye having I is 2.50 V in the polypropylene carbonate, the voltage of the organic dye having $ClO_4^-$ is 2.63 V, whereas the voltage of the organic dye having $CF_3SO_3^-$ is as high as 2.75 V, which shows that the anion ($CF_3SO_3^-$) has strong bonding strength to the skeleton of the dye molecules and thus has excellent stability.

Next, an embodiment in which the anion X⊖ in the organic dye is thiocyanate ion $SCN^-$ will be described.

1% of various organic dyes shown in Fig. 49 (with respect to Ⓣ and A in Tables, refer to Fig. 6) were dissolved in

1,2-dichloro ethane and this solution was applied to methyl methacrylate substrates by spin coating to form recording layers of 60 nm.

A water solution containing 4% of polyvinyl alcohol added with ammonium dichromate (cross-linking agent) was applied to the recording layers by spin coating to form a film of 60 nm. This film was dried and subjected to a cross-linking treatment by being irradiated with ultraviolet rays to be formed into a thin layer, whereby optical disks were made.

Fig. 50 is a diagram showing the dyes used in comparative examples, wherein $I^-$ and $ClO_4^-$ are used in anions.

A recording/reproducing test was carried out for the optical disks made using the various organic dyes shown in Figs. 49 and 50 and the result thereof is shown in Figs. 51 and 52. The recording/reproducing test measurements were carried out using a laser beam of 830 nm with a writing power of 5 mW, a pulse width of 100 ns, a linear velocity of 6 m/sec. and a reading out power of 1 mW to determine C/N values.

As apparent from Figs. 51 and 52, the C/N values of the comparative examples are in the range of 40 - 44 dB, whereas the C/N values of the embodiments are as high as 47 - 53 dB, so that it is found that the embodiment has excellent writing sensitivity.

Although the organic dye arranged with $SCN^-$ as anions has excellent light sensitivity, it has a drawback in light resistance. Thus, in this embodiment an infrared ray absorbing agent may be added to the recording layer to improve the light resistance while keeping the excellent light sensitivity.

The kind of infrared ray absorbing agent can be arbitrarily determined in relation with the organic dye. Examples of the infrared ray absorbing agent includes the following:

1. metal complex compound, brand names; PA1001, PA1005, PA1006 of Mitsui Toatsu Kagaku Co., Ltd.
2. bis-di-thio-Nickel complex compound, brand name; NKX-114 of Nihon Kanko Sikiso Laboratory Ltd.
3. diimonium type organic compound, brand name; IRG-002 IRG-003, IRG-009, IRG-010 of Nihon Kayaku Co., Ltd.

The above absorbing agents in an amount of 20 wt % or less were added to an organic dye. Note that when a film is formed, it is dissolved in a solution made by mixing two or more kinds of solvent, such as an alcohol solvent and a halide solvent or in an alcohol solution and spin coated on the substrate.

The present invention arranged as above can provide an optical data recording medium having excellent durability to light and heat, and superior stability.

Further, the present invention can provide an optical data recording medium having excellent writing sensitivity.

## Claims

**1.** An optical data recording medium comprising:

a recording layer comprising an organic dye of formula

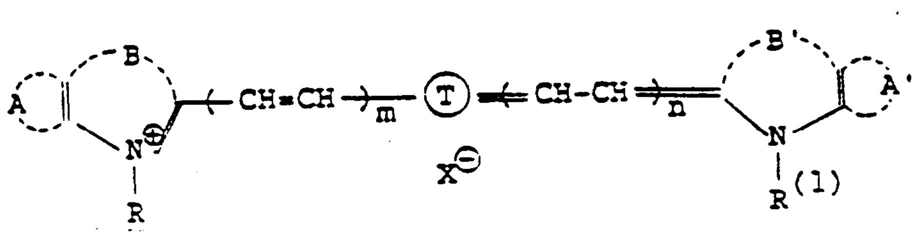

(1)

wherein

Ⓣ is a linear, cyclic or polycyclic unsaturated group of 3 to 17 carbon atoms, optionally substituted by a halogen atom, a

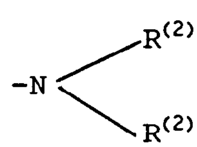

group, in which each $R^{(2)}$, which may be identical or different, is a linear chain or aromatic ring containing up to 6 carbon atoms, a methoxy group or a $OCOCH_3$ group, and wherein the group $-(CH=CH)_m-$Ⓣ$=(CH-CH)=_n$ represents a completely conjugated polymethine chain;

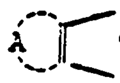 and 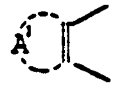

,

which may be identical or different, each represent an aromatic group optionally substituted by -I, -Br, -Cl, $-C_nH_{2n+1}$, in which n is from 1 to 22, $-OCH_3$,

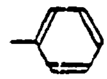 ,

$-NO_2$ , $-OC_2H_5$ or

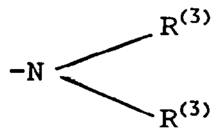 ,

in which $R^{(3)}$ is a linear hydrocarbon chain or an aromatic ring;

B and B', which may be identical or different, each represent -0-, -S-, -Se-, -CH=CH- or

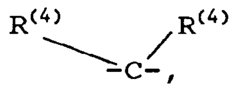 ,

in which each $R^{(4)}$, which may be identical or different, represents a $C_1$-$C_4$ alkyl group;

R and $R^{(1)}$, which may be identical or different, each represents a $C_1$-$C_{22}$ alkyl group optionally substituted by a sulfonyl or carboxyl group;

$X^{\ominus}$ represents at least one of $CF_3$ $SO_3$ and $SCN^-$ as an essential component, optionally in combination with $PF_6^-$; and

m and n, which may be identical or different, each represents an integer of from 0 to 3, such that $m + n \leq 3$.

**2.** A medium according to claim 1, wherein Ⓣ is -CH = CH-CH= or

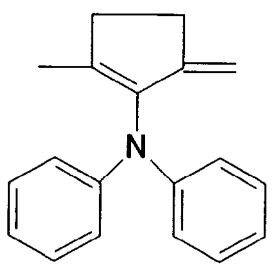 .

**3.** A medium according to claim 1 or 2, wherein

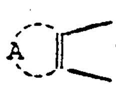 and 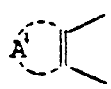 are 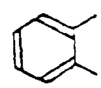 .

**4.** A medium according to any one of claims 1 to 3, wherein B and B' are

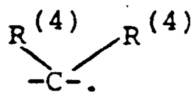

5. A medium according to any one of claims 1 to 4, wherein R and $R^{(1)}$ are the same and are $C_2H_5$ or $C_3H_7$.

6. A medium according to claim 1, wherein Ⓣ is

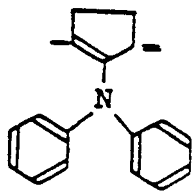 , 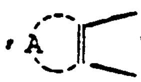 and 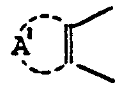 are 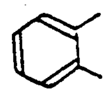 , B and B' are 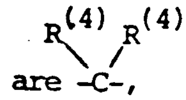

and R and R' are $C_2H_5$.

7. A medium according to any one of the preceding claims, wherein a thin hydrophilic polymer layer of at least 10 nm in thickness is on said recording layer.

8. A medium according to claim 7, wherein the hydrophilic polymer is at least one selected from polyvinyl alcohol and denatured cellulose.

9. A medium according to claim 7 or 8, wherein said thin layer is cross-linked.

10. A medium according to any one of claims 7 to 9, wherein a further layer is formed on said thin layer.

11. A medium according to any one of claims 1 to 6, wherein a thin layer of at least 10 nm in thickness having an optical data recording property by itself is on said recording layer.

12. A medium according to claim 11, wherein said thin film layer is composed of a polymer of a polymerizable monomer and a dye.

13. A medium according to claim 12, wherein said polymerizable monomer is at least one reactive monomer selected from acrylic, styrene, acrylamide, fatty acid vinyl ester, nitrile, vinyl ether, halogenated olefin, conjugated diene, N-vinyl compound and olefinic monomers.

14. A medium according to claim 1, wherein said anion is $SCN^-$ and an infrared ray absorbing agent is contained in said recording layer.

**Patentansprüche**

1. Aufzeichnungsmedium zur optischen Datenaufzeichnung, das eine Aufzeichnungsschicht umfaßt, die einen organischen Farbstoff der Formel

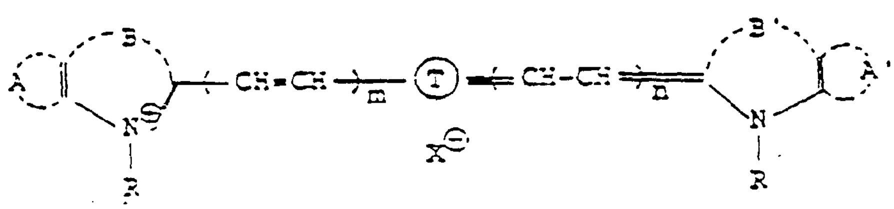

(1)

enthält, worin bedeuten:

- Ⓣ eine geradkettige, cyclische oder polycyclische ungesättigte Gruppe mit 3 bis 17 Kohlenstoffatomen, die

substituiert sein kann mit einem Halogenatom, einer Gruppe

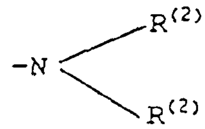

,

in der jedes $R^{(2)}$, die gleich oder voneinander verschieden sind, eine gerade Kette oder ein aromatischer Ring mit bis zu 6 Kohlenstoffatomen ist, einer Methoxygruppe oder einer Gruppe $OCOCH_3$, wobei die Gruppe -$(CH{=}CH)_m$-Ⓣ=$(CH\text{-}CH){=}_n$ eine vollständig konjugierte Polymethinkette ist;

- 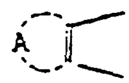 und 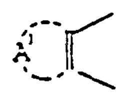

  ,

  die gleich oder voneinander verschieden sind, eine aromatische Gruppe, die mit -J, -Br, -Cl, -$C_nH_{2n+1}$ mit n = 1 - 22, -$OCH_3$,

  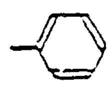 ,

  -$NO_2$, -$OC_2H_5$ oder

  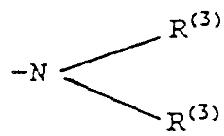 ,

  wobei $R^{(3)}$ eine gerade Kohlenwasserstoffkette oder ein aromatischer Ring ist, substituiert sein kann;

- B und B', die gleich oder voneinander verschieden sind, -O-, -S-, -Se-, -CH=CH- oder

  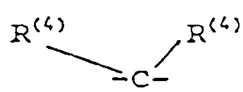 ,

  wobei $R^{(4)}$, die gleich oder voneinander verschieden sind, eine $C_{1-4}$-Alkylgruppe darstellen;

- R und $R^{(1)}$, die gleich oder voneinander verschieden sind, eine $C_{1-22}$-Alkylgruppe, die mit einer Sulfonyl- oder Carboxygruppe substituiert sein kann;

- $X^-$ mindestens einen unter $CF_3SO_3^-$ und $SCN^-$ ausgewählten Substituenten als wesentlicher Bestandteil, ggf. in Kombination mit $PF_6^-$; und

- m und n, die gleich oder voneinander verschieden sind, Null oder eine ganze Zahl von 1 bis 3, wobei $m + n \leq 3$ ist.

**2.** Aufzeichnungsmedium nach Anspruch 1, wobei Ⓣ-CH = CH-CH= oder

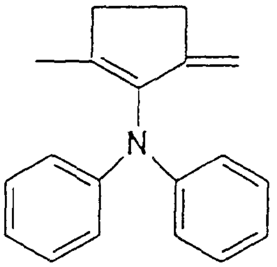

ist.

3. Aufzeichnungsmedium nach Anspruch 1 oder 2, wobei

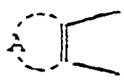 und 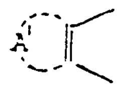

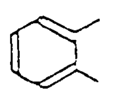

sind.

4. Aufzeichnungsmedium nach einem der Ansprüche 1 bis 3, wobei B und B'

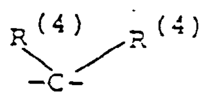

sind.

5. Aufzeichnungsmedium nach einem der Ansprüche 1 bis 4, wobei R und R(1) gleich sind und $C_2H_5$ oder $C_3H_7$ bedeuten.

6. Aufzeichnunqsmedium nach Anspruch 1, wobei Ⓣ

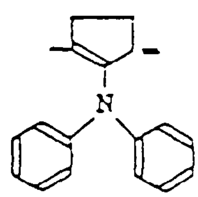

,

ist

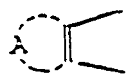 und 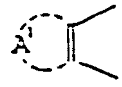

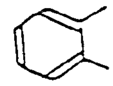

sind, B und B'

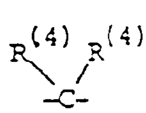

sind und R und R' $C_2H_5$ bedeuten.

**7.** Aufzeichnungsmedium nach einem der vorhergehenden Ansprüche, wobei sich eine dünne Schicht aus einem hydrophilen Polymer mit mindestens 10 nm Dicke auf der Aufzeichnungsschicht befindet.

**8.** Aufzeichnungsmedium nach Anspruch 7, wobei das hydrophile Polymer unter Polyvinylalkohol und denaturierter Cellulose ausgewählt ist.

**9.** Aufzeichnungsmedium nach Anspruch 7 oder 8, wobei die dünne Schicht vernetzt ist.

**10.** Aufzeichnungsmedium nach Anspruch 7 bis 9, wobei eine weitere Schicht auf der dünnen Schicht ausgebildet ist.

**11.** Aufzeichnungsmedium nach Anspruch 1 bis 6, wobei sich eine dünne Schicht mit mindestens 10 nm Dicke auf der Aufzeichnungsschicht befindet, die selbst Eigenschaften zur optischen Datenaufzeichnung aufweist.

**12.** Aufzeichnungsmedium nach Anspruch 11, wobei die dünne Schicht aus einem Polymer aus einem polymerisierbaren Monomer und einem Farbstoff zusammengesetzt ist.

**13.** Aufzeichnungsmedium nach Anspruch 12, wobei das polymerisierbare Monomer mindestens ein reaktives Monomer ist, das unter Acrylmonomeren, Styrol, Acrylamid, Fettsäurevinylestern, Nitrilen, Vinylethern, halogenierten Olefinen, konjugierten Dienen, N-Vinylverbindungen und olefinischen Monomeren ausgewählt ist.

**14.** Aufzeichnungsmedium nach Anspruch 1, wobei das Anion $SCN^-$ ist und ein Infrarotstrahlung absorbierendes Mittel in der Aufzeichnungsschicht enthalten ist.

## Revendications

**1.** Support d'enregistrement de données optiques, comportant une couche d'enregistrement comprenant un colorant organique de formule

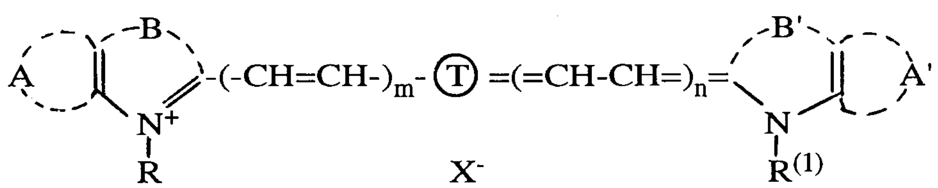

dans laquelle
Ⓣ représente un groupe insaturé, linéaire, cyclique ou polycyclique, comportant de 3 à 17 atomes de carbone, et portant éventuellement comme substituant un atome d'halogène, un groupe méthoxy, un groupe $-OCOCH_3$ ou un groupe

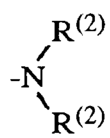

dans lequel les symboles $R^{(2)}$, qui peuvent être identiques ou différents, représentent chacun un groupe à chaîne linéaire ou un cycle aromatique comportant jusqu'à 6 atomes de carbone, le groupe $-(CH{=}CH)_m$-Ⓣ$=(CH{=}CH)_n=$ constituant une chaîne polyméthinique entièrement conjuguée ;

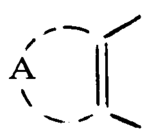 et 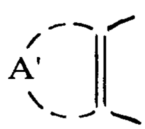 ,

qui peuvent être identiques ou différents, représentent chacun un groupe aromatique portant éventuellement comme substituant -I, -Br, -Cl, $-C_nH_{2n+1}$ où n vaut de 1 à 22, $-OCH_3$, $-NO_2$, $-OC_2H_5$,

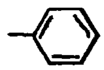 ou 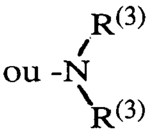

où $R^{(3)}$ représente une chaîne hydrocarbonée linéaire ou un groupe aromatique ;
B et B', qui peuvent être identiques ou différents, représentent chacun -O-, -S-, -Se-, -CH=CH- ou

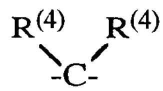

où les symboles $R^{(4)}$, qui peuvent être identiques ou différents, représentent chacun un groupe alkyle en $C_{1-4}$ ; R et $R^{(1)}$, qui peuvent être identiques ou différents, représentent chacun un groupe alkyle en $C_{1-22}$, qui porte éventuellement un substituant sulfo ou carboxy ;
$X^-$ représente au moins l'un des ions $CF_3SO_3^-$ ou $SCN^-$ comme composant essentiel, éventuellement combiné avec $PF_6^-$ ;
et m et n, qui peuvent être identiques ou différents, représentent chacun un nombre entier valant de 0 à 3, sous réserve que $m + n \leq 3$.

**2.** Support conforme à la revendication 1, dans lequel Ⓣ représente
-CH=CH-CH= ou

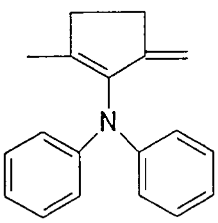

**3.** Support conforme à la revendication 1 ou 2, dans lequel

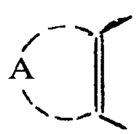 et 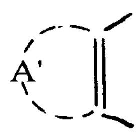

représentent

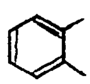 .

**4.** Support conforme à l'une des revendications 1 à 3, dans lequel B et B' représentent

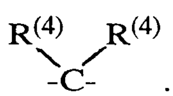 .

**5.** Support conforme à l'une des revendications 1 à 4, dans lequel R et $R^{(1)}$ sont identiques et représentent $-C_2H_5$ ou $-C_3H_7$.

**6.** Support conforme à la revendication 1, dans lequel Ⓣ représente
-CH=CH-CH= ou

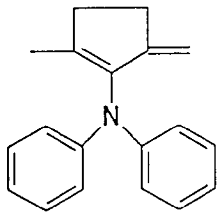 ,

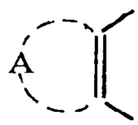 et 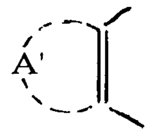

représentent

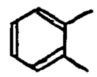 ,

B et B' représentent

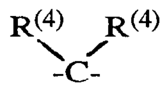 ,

et R et $R^{(1)}$ représentent $-C_2H_5$.

**7.** Support conforme à l'une des revendications précédentes, dans lequel une mince couche d'un polymère hydrophile, épaisse d'au moins 10 nm, se trouve sur ladite couche d'enregistrement.

**8.** Support conforme à la revendication 7, dans lequel le polymère hydrophile est au moins un polymère choisi parmi le poly(alcool de vinyle) et la cellulose dénaturée.

**9.** Support conforme à la revendication 7 ou 8, dans lequel ladite couche mince est réticulée.

**10.** Support conforme à l'une des revendications 7 à 9, dans lequel une couche supplémentaire est étalée sur ladite couche mince.

**11.** Support conforme à l'une des revendications 1 à 6, dans lequel une mince couche épaisse d'au moins 10 nm, intrinsèquement capable d'enregistrer des données optiques, se trouve sur ladite couche d'enregistrement.

**12.** Support conforme à la revendication 11, dans lequel ladite couche mince se compose d'un polymère d'un monomère polymérisable et d'un colorant.

**13.** Support conforme à la revendication 12, dans lequel ledit monomère polymérisable est au moins un monomère réactif choisi parmi les monomères acryliques, le styrène, l'acrylamide, les esters vinyliques d'acide gras, les nitriles, les éthers vinyliques, les oléfines halogénées, les diènes conjugués, les composés N-vinyliques et les monomères oléfiniques.

**14.** Support conforme à la revendication 1, dans lequel ledit anion est $SCN^-$ et ladite couche d'enregistrement contient un agent absorbant un rayonnement infrarouge.

FIG. 1

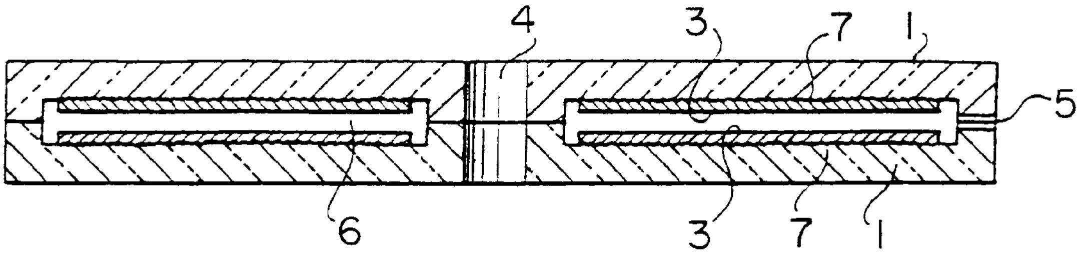


FIG. 2

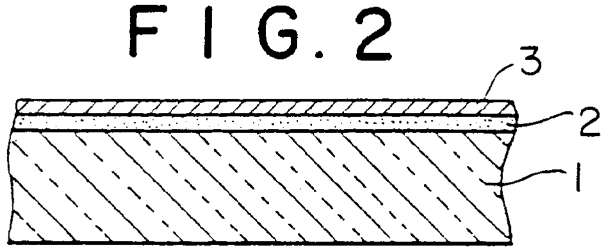


FIG. 3

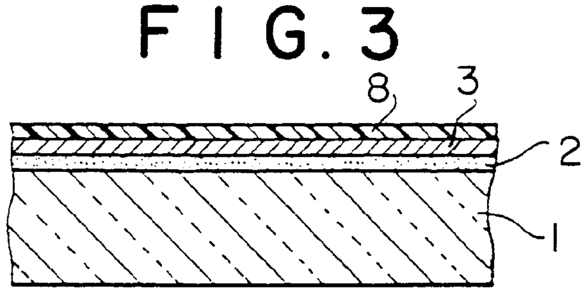


FIG. 4

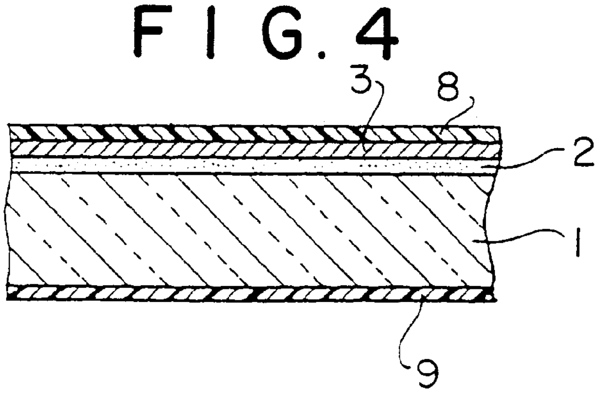

# F I G. 5

| | | | |
|---|---|---|---|
| $-CH=CH-CH=$ | (I) | 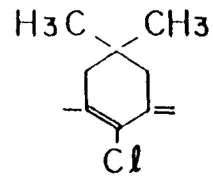 | (VI) |
| 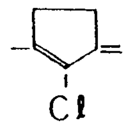 | (II) | 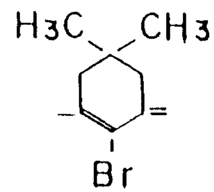 | (VII) |
| 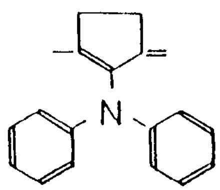 | (III) | 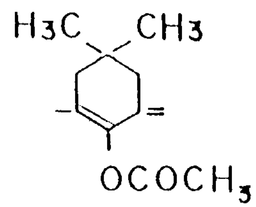 | (VIII) |
| 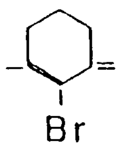 | (IV) | 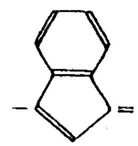 | (IX) |
| 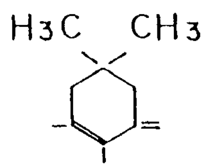 | (V) | 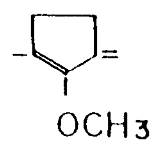 | (X) |

# FIG. 6

| | | |
|---|---|---|
| 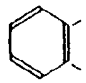 (I) | 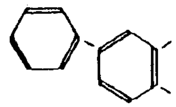 (VIII) | 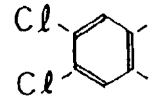 (XV) |
| 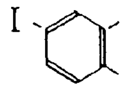 (II) | 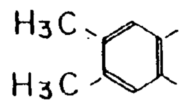 (IX) | 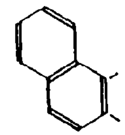 (XVI) |
| 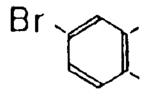 (III) | 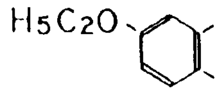 (X) | 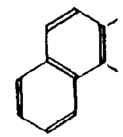 (XVII) |
| 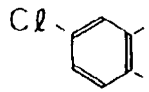 (IV) | 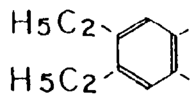 (XI) | |
| 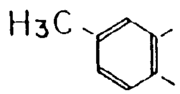 (V) | 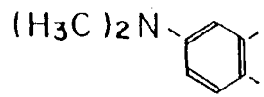 (XII) | |
| 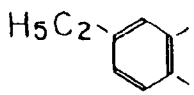 (VI) | 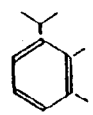 (XIII) | |
| 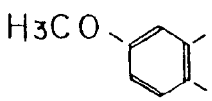 (VII) | 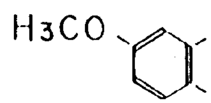 (XIV) | |

F I G. 13

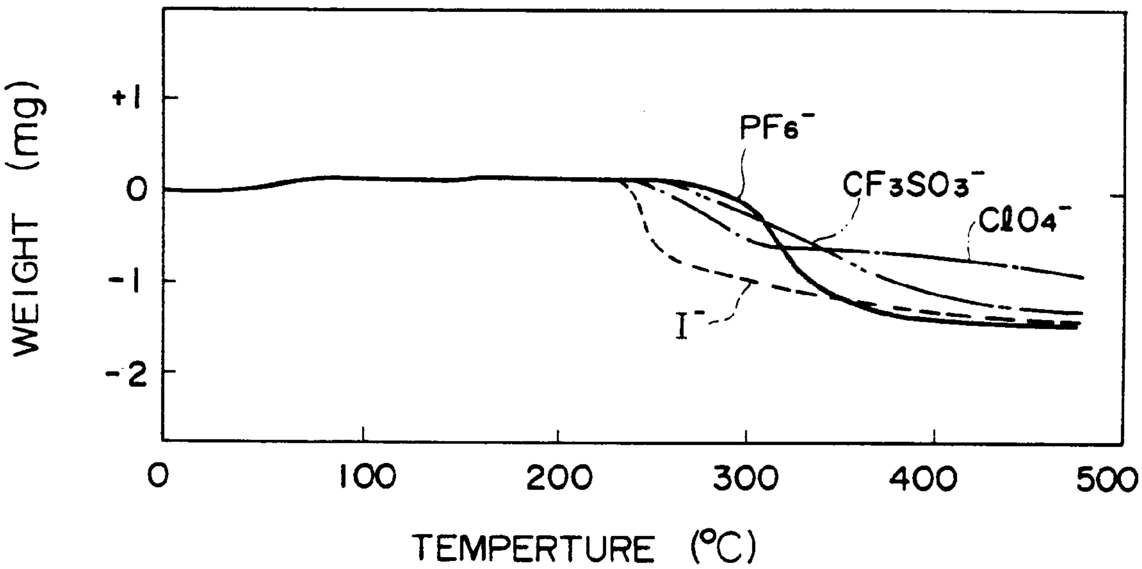
+1
0
-1
-2
WEIGHT (mg)
0
100
200
300
400
500
TEMPERTURE (°C)
PF6⁻
CF3SO3⁻
Cl O4⁻
I⁻

F I G. 20

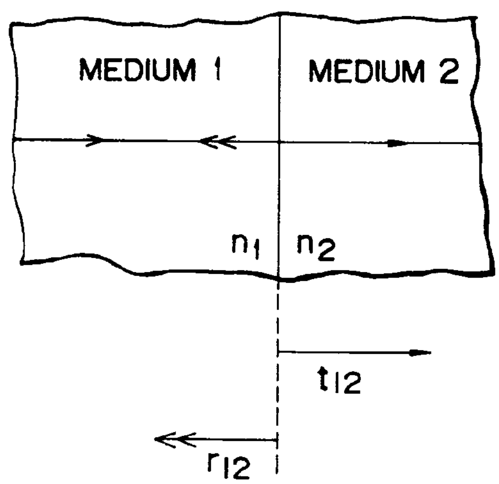
MEDIUM 1
MEDIUM 2
n1
n2
t12
r12

FIG. 16

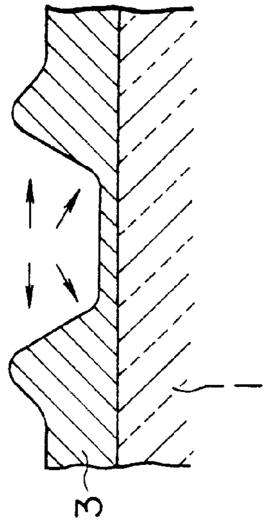


FIG. 15

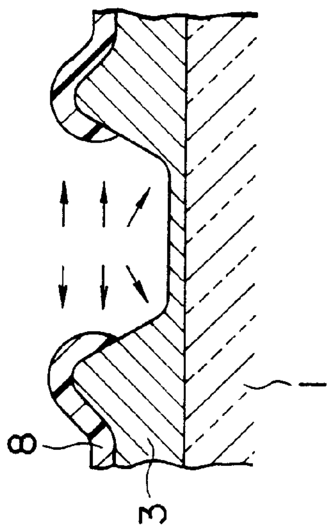


FIG. 14

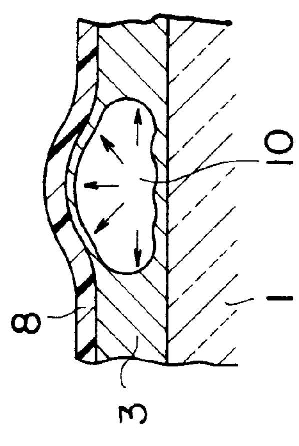


FIG. 19

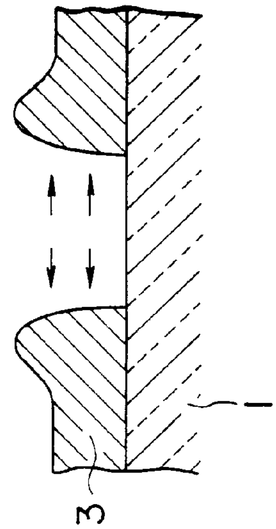


FIG. 18

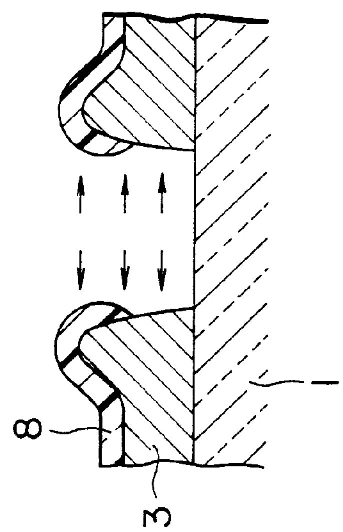


FIG. 17

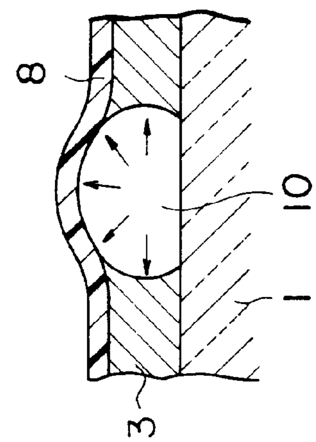

FIG. 21

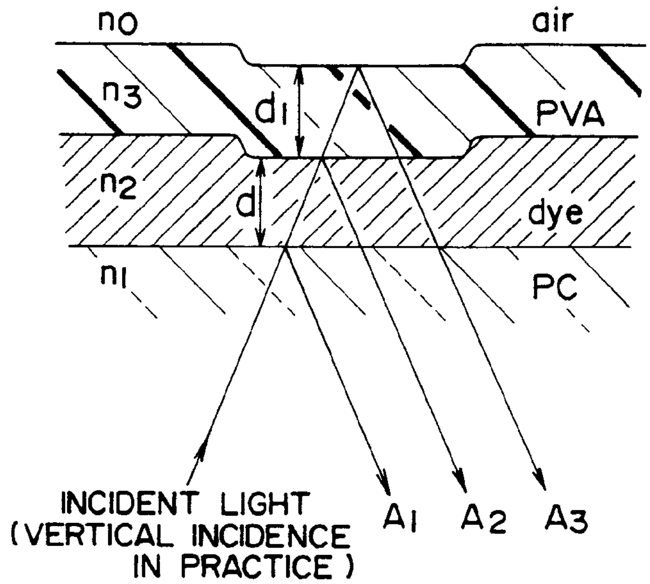
no
air
n3
d1
PVA
n2
d
dye
n1
PC
INCIDENT LIGHT
(VERTICAL INCIDENCE
IN PRACTICE)
A1
A2
A3

FIG. 22

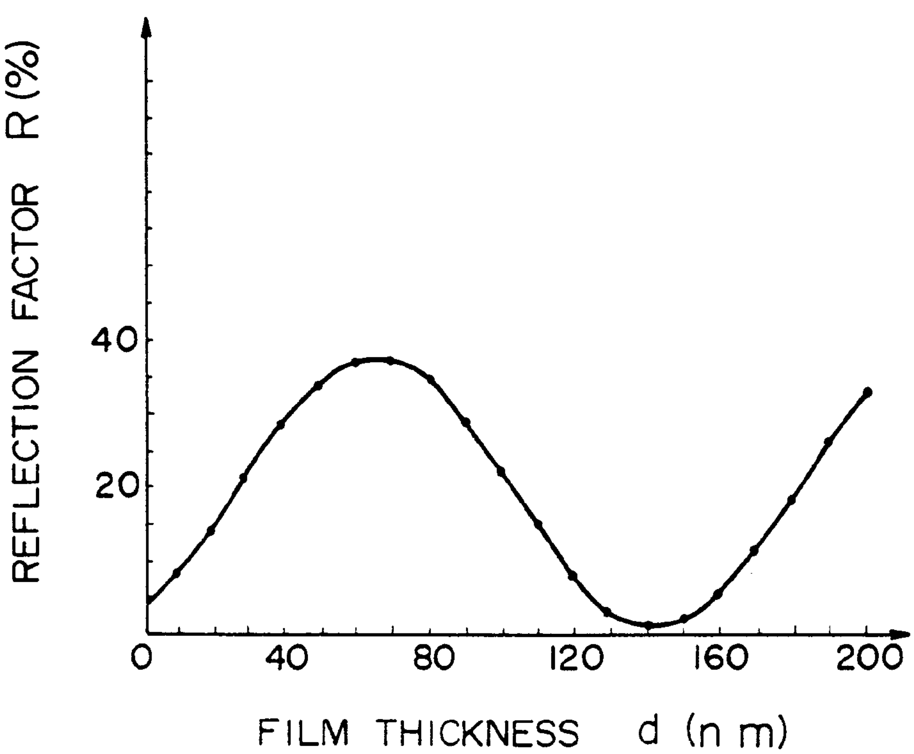
REFLECTION FACTOR R (%)
40
20
0
40
80
120
160
200
FILM THICKNESS d (n m)

FIG. 23

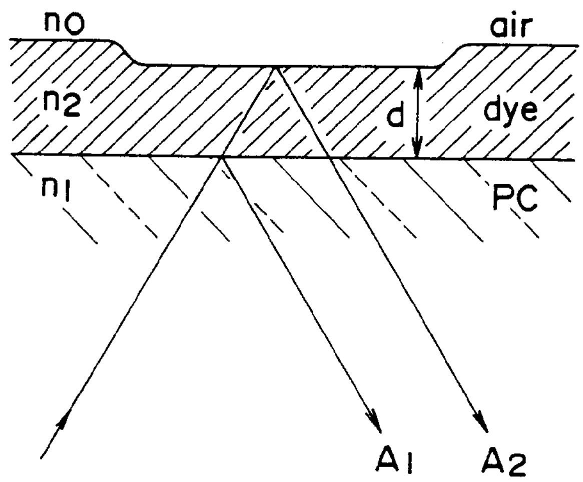
no
air
n2
d
dye
n1
PC
A1
A2

FIG. 24

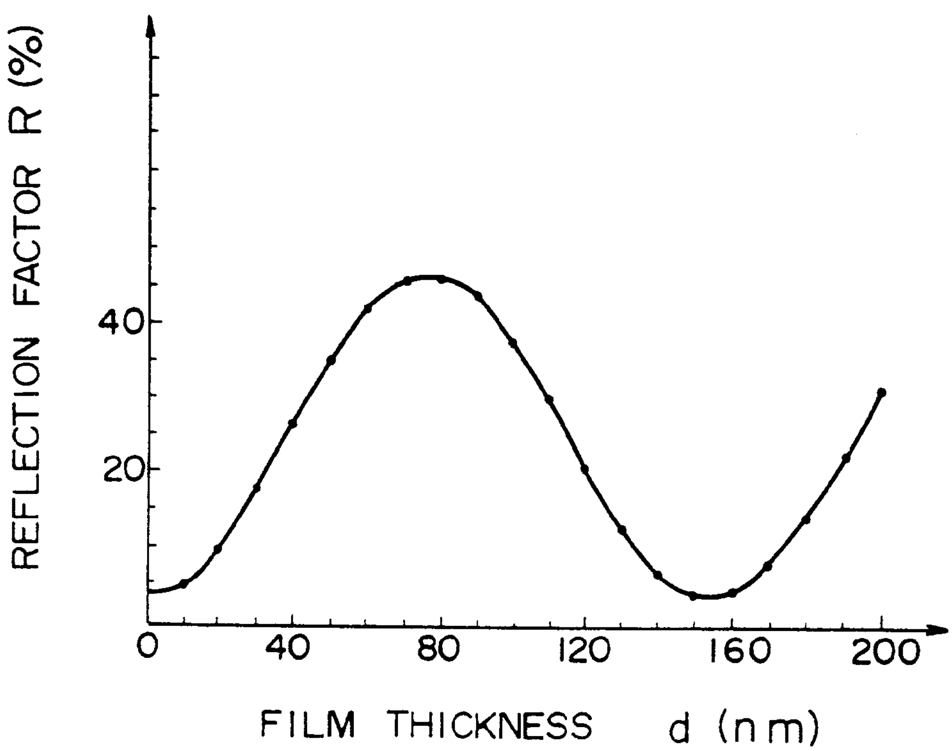
REFLECTION FACTOR R (%)
40
20
0
40
80
120
160
200
FILM THICKNESS d (nm)

F I G. 25

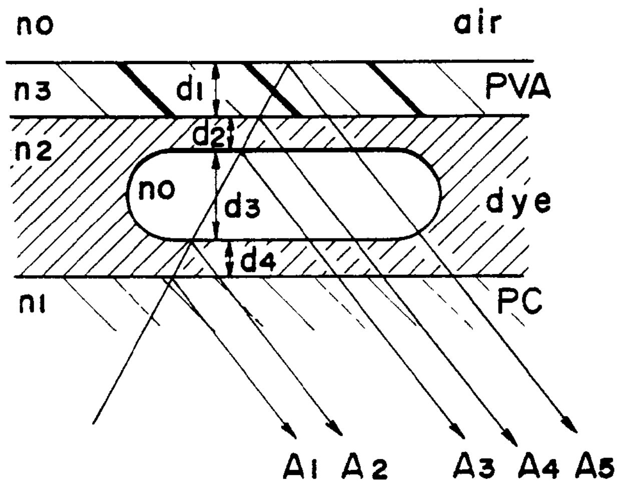
no
air
n3
d1
PVA
n2
d2
no
d3
dye
d4
n1
PC
A1 A2 A3 A4 A5

F I G. 26

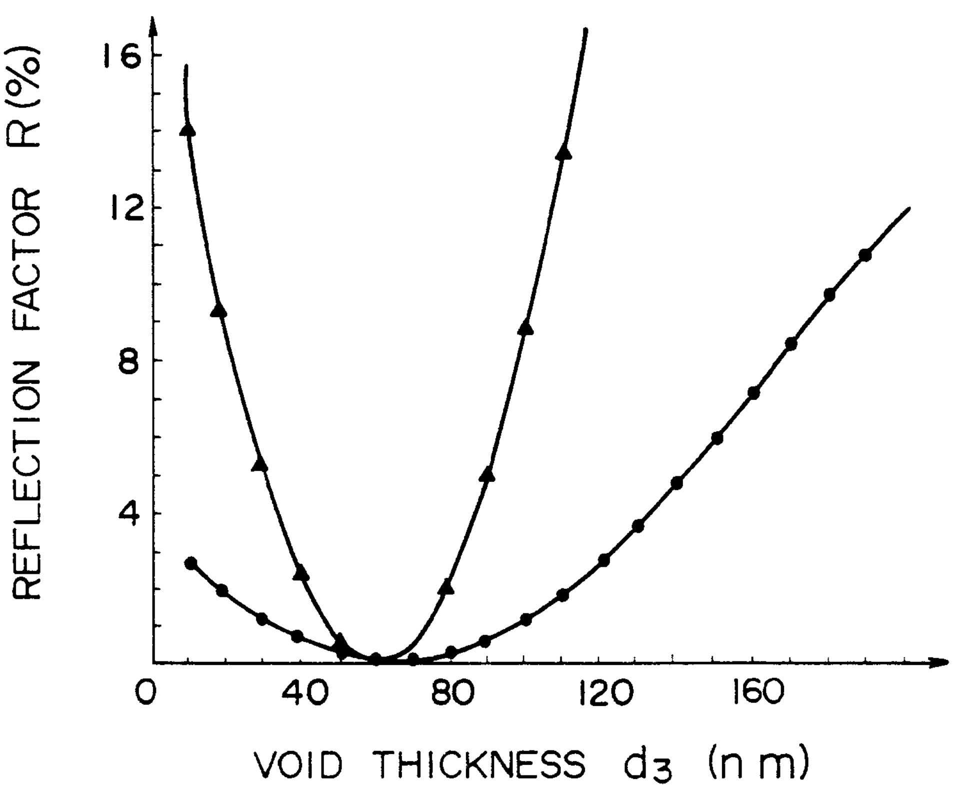
REFLECTION FACTOR R(%)
16
12
8
4
0
40
80
120
160
VOID THICKNESS d3 (n m)

FIG. 27

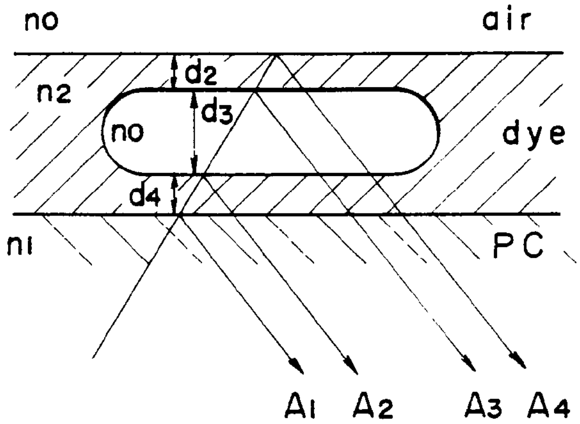
no
air
n2
d2
d3
no
dye
d4
n1
PC
A1
A2
A3
A4

FIG. 28

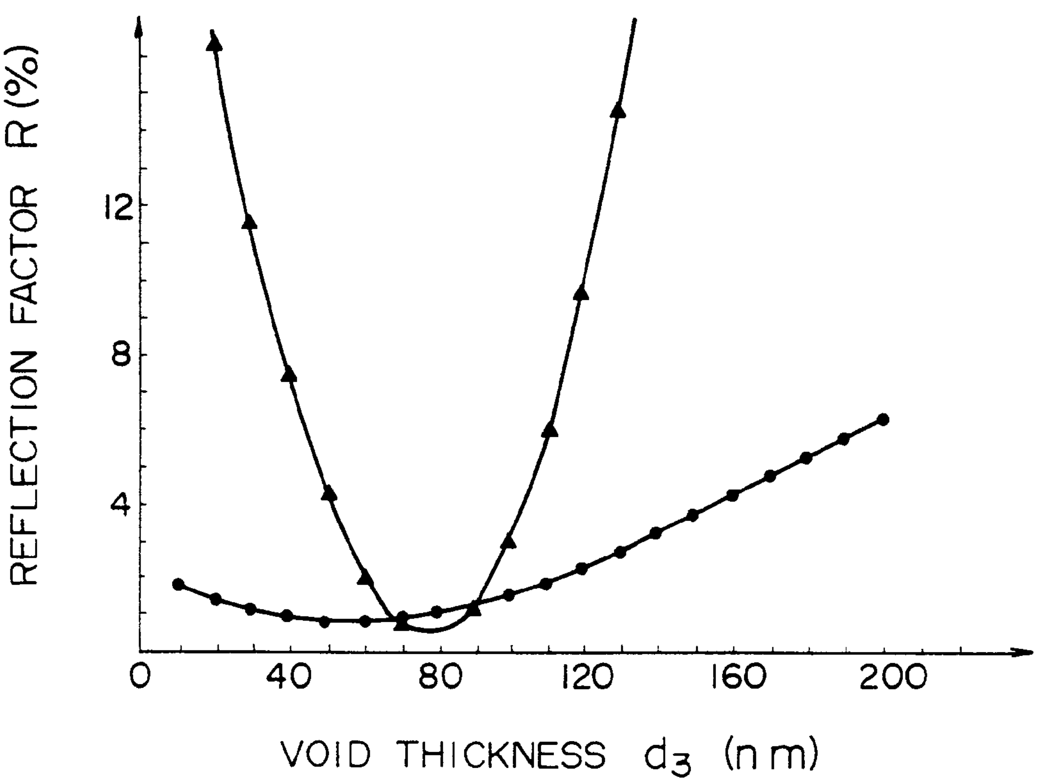
REFLECTION FACTOR R (%)
12
8
4
0
40
80
120
160
200
VOID THICKNESS d3 (nm)

FIG. 29

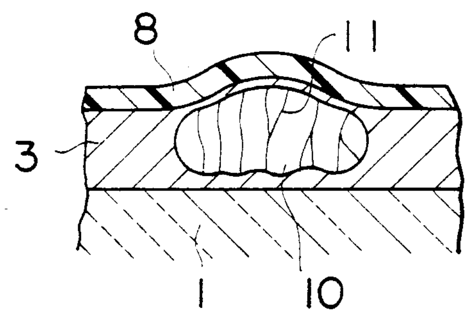


FIG. 43

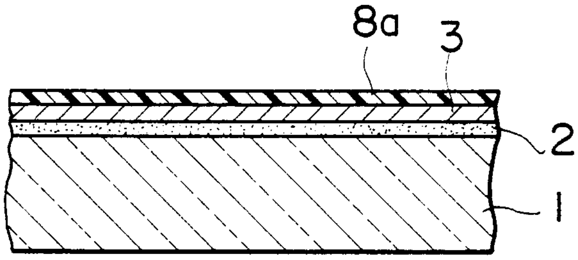

F I G. 30

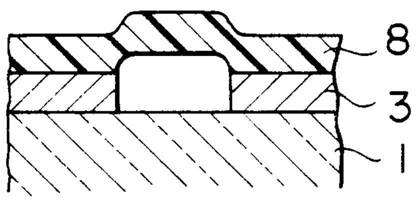


F I G. 33

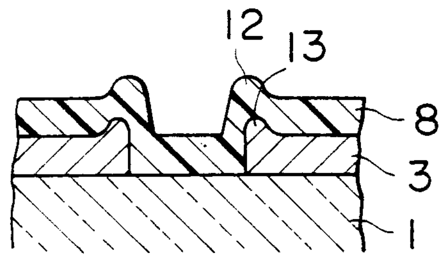


F I G. 31

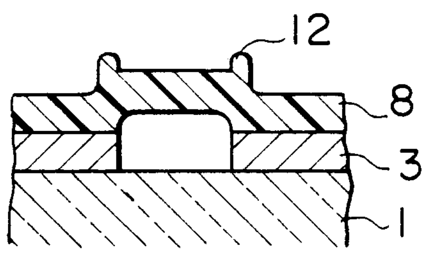


F I G. 34

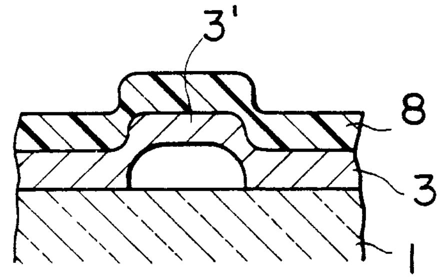


F I G. 32

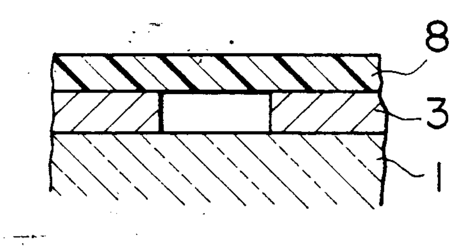


F I G. 35

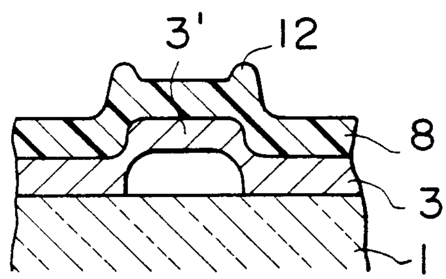

FIG. 39

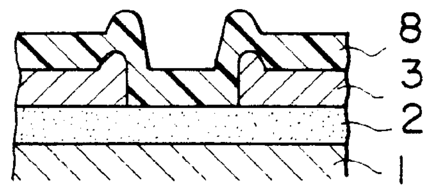


FIG. 36

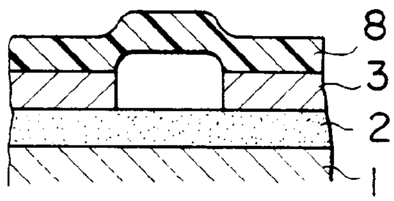


FIG. 40

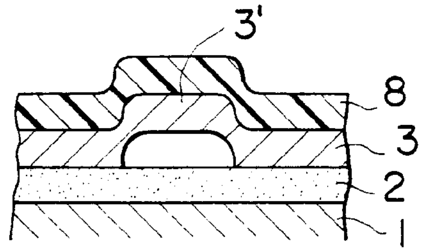


FIG. 37

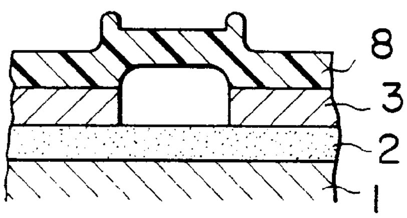


FIG. 41

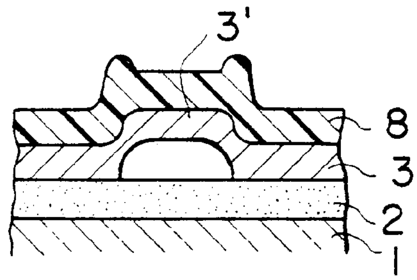


FIG. 38

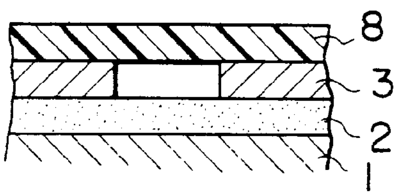


FIG. 42

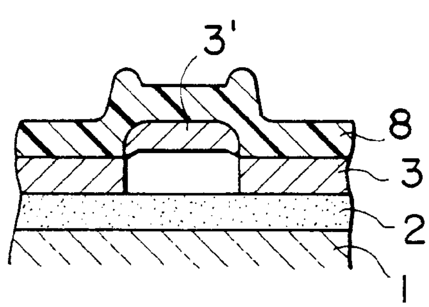

# F I G. 44

| COMPOUND NO. | R | $R^{(1)}$ | ---A--- | ---B--- | -(T)= | X |
|---|---|---|---|---|---|---|
| 30 | $CH_3$ | $CH_3$ | I | 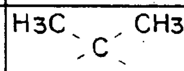 | II | $CF_3SO_3$ |
| 31 | $CH_3$ | $CH_3$ | IV | 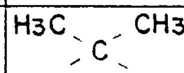 | II | $CF_3SO_3$ |
| 32 | $C_2H_5$ | $C_2H_5$ | I | 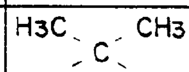 | I | $CF_3SO_3$ |
| 33 | $C_2H_5$ | $C_2H_5$ | IV | 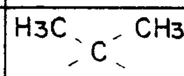 | I | $CF_3SO_3$ |
| 34 | $C_2H_5$ | $C_2H_5$ | XVI | 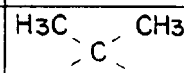 | III | $CF_3SO_3$ |
| 35 | $C_3H_7$ | $C_3H_7$ | I | 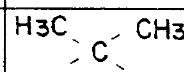 | I | $CF_3SO_3$ |
| 36 | $C_3H_7$ | $C_3H_7$ | IV | 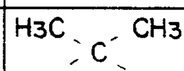 | I | $CF_3SO_3$ |
| 37 | $C_3H_7$ | $C_3H_7$ | XVI | 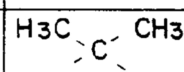 | III | $CF_3SO_3$ |
| 38 | $C_5H_{11}$ | $C_5H_{11}$ | I | 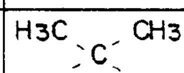 | I | $CF_3SO_3$ |
| 39 | $C_5H_{11}$ | $C_5H_{11}$ | IV | 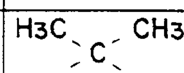 | I | $CF_3SO_3$ |
| 40 | $C_5H_{11}$ | $C_5H_{11}$ | XVI | 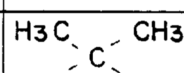 | III | $CF_3SO_3$ |
| 41 | $C_8H_{17}$ | $C_8H_{17}$ | I | 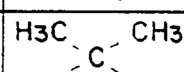 | I | $CF_3SO_3$ |
| 42 | $C_8H_{17}$ | $C_8H_{17}$ | IV | 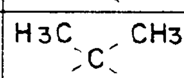 | I | $CF_3SO_3$ |
| 43 | $C_8H_{17}$ | $C_8H_{17}$ | XVI | 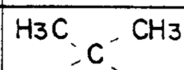 | III | $CF_3SO_3$ |
| 44 | $C_5H_{11}$ | $C_5H_{11}$ | I | $-CH=CH-$ | I | $CF_3SO_3$ |

# F I G. 45

| COMPOUND NO. | R | $R^{(1)}$ | —A--- | --- B--- | —Ⓣ= | X |
|---|---|---|---|---|---|---|
| 45 | $C_5H_{11}$ | $C_5H_{11}$ | X | – S – | IV | $CF_3SO_3$ |
| 46 | $(CH_2)_3SO_3H$ | $(CH_2)_3SO_3H$ | I | 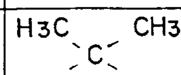 | I | $CF_3SO_3$ |
| 47 | $(CH_2)_2COOH$ | $(CH_2)_2COOH$ | I | 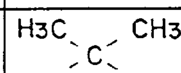 | I | $CF_3SO_3$ |
| 49 | $CH_3$ | $C_3H_7$ | I | 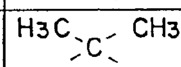 | I | $CF_3SO_3$ |
| 50 | $CH_3$ | $C_5H_{11}$ | I | 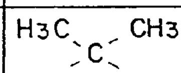 | I | $CF_3SO_3$ |
| 51 | $C_2H_5$ | $C_3H_7$ | I | 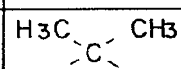 | I | $CF_3SO_3$ |
| 52 | $C_2H_5$ | $C_5H_{11}$ | XVI | 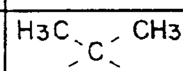 | III | $CF_3SO_3$ |
| 53 | $C_3H_7$ | $C_8H_{17}$ | XVI | 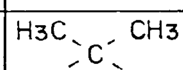 | III | $CF_3SO_3$ |
| 54 | $C_3H_7$ | $C_{14}H_{29}$ | XVI | 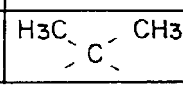 | III | $CF_3SO_3$ |

# FIG. 46

| COMPOUND NO. | C/N (dB) | TRANSMITTANCE RATIO AFTER FADING TEST (%) | NUMBER OF READING TIMES |
|---|---|---|---|
| 30 | 49 | 23 | $1.4 \times 10^6$ |
| 31 | 48 | 24 | $1.0 \times 10^6$ |
| 32 | 51 | 19 | $2.6 \times 10^6$ |
| 33 | 50 | 21 | $2.0 \times 10^6$ |
| 34 | 48 | 23 | $1.2 \times 10^6$ |
| 35 | 52 | 19 | $3.0 \times 10^6$ |
| 36 | 51 | 20 | $2.2 \times 10^6$ |
| 37 | 50 | 23 | $1.3 \times 10^6$ |
| 38 | 52 | 19 | $2.4 \times 10^6$ |
| 39 | 51 | 21 | $1.8 \times 10^6$ |
| 40 | 49 | 24 | $1.0 \times 10^6$ |
| 41 | 51 | 21 | $1.9 \times 10^6$ |
| 42 | 50 | 22 | $1.6 \times 10^6$ |
| 43 | 48 | 25 | $0.9 \times 10^6$ |
| 44 | 49 | 23 | $1.2 \times 10^6$ |

# FIG. 47

| COMPOUND NO. | C/N (dB) | TRANSMITTANCE RATIO AFTER FADING TEST (%) | NUMBER OF READING TIMES |
|---|---|---|---|
| 45 | 47 | 26 | $0.7 \times 10^6$ |
| 46 | 49 | 25 | $0.8 \times 10^6$ |
| 47 | 48 | 24 | $0.9 \times 10^6$ |
| 48 | 50 | 23 | $1.1 \times 10^6$ |
| 49 | 49 | 22 | $1.4 \times 10^6$ |
| 50 | 49 | 23 | $1.3 \times 10^6$ |
| 51 | 50 | 22 | $1.4 \times 10^6$ |
| 52 | 50 | 24 | $0.8 \times 10^6$ |
| 53 | 47 | 25 | $0.6 \times 10^6$ |
| 54 | 46 | 27 | $0.3 \times 10^6$ |

FIG. 48

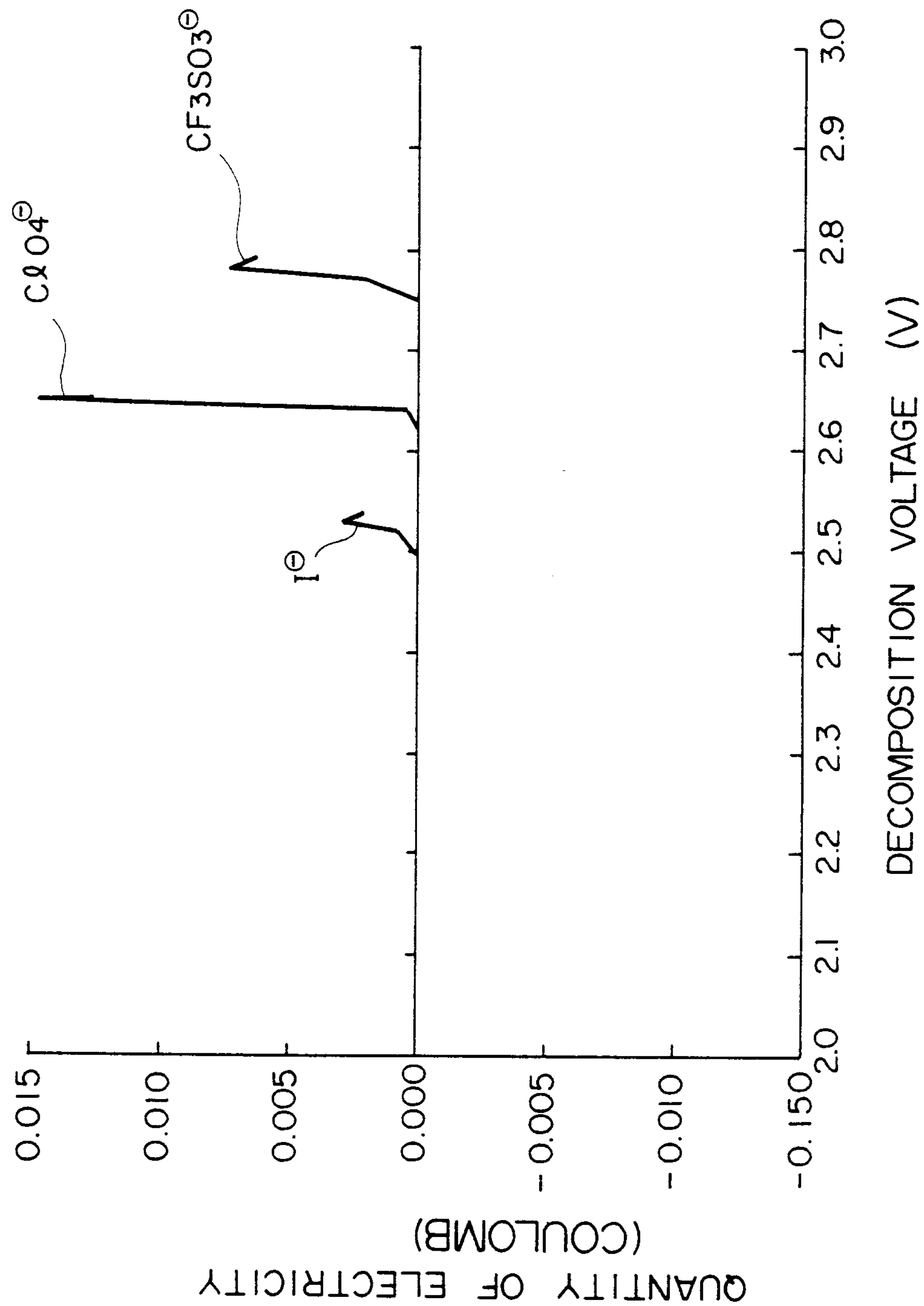
QUANTITY OF ELECTRICITY
(COULOMB)
0.015
0.010
0.005
0.000
-0.005
-0.010
-0.150
2.0
2.1
2.2
2.3
2.4
2.5
2.6
2.7
2.8
2.9
3.0
DECOMPOSITION VOLTAGE (V)
I⊖
Cℓ04⊖
CF3SO3⊖

# F I G. 49

| COMPOUND NO. | R | $R^1$ | --A-- | --- B --- | -(T)= | X |
|---|---|---|---|---|---|---|
| 55 | $CH_3$ | $CH_3$ | I | 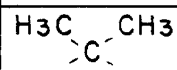 | I | SCN |
| 56 | $CH_3$ | $CH_3$ | IV | 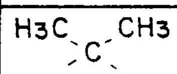 | I | SCN |
| 57 | $C_2H_5$ | $C_2H_5$ | I | 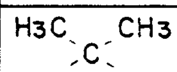 | I | SCN |
| 58 | $C_2H_5$ | $C_2H_5$ | IV | 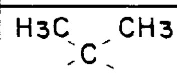 | I | SCN |
| 59 | $C_2H_5$ | $C_2H_5$ | XVI | 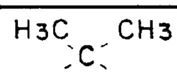 | III | SCN |
| 60 | $C_3H_7$ | $C_3H_7$ | I | 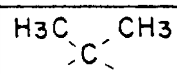 | I | SCN |
| 61 | $C_3H_7$ | $C_3H_7$ | IV | 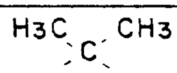 | I | SCN |
| 62 | $C_3H_7$ | $C_3H_7$ | XVI | 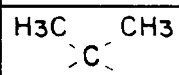 | III | SCN |
| 63 | $C_5H_{11}$ | $C_5H_{11}$ | I | 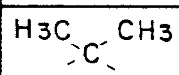 | I | SCN |
| 64 | $C_5H_{11}$ | $C_5H_{11}$ | IV | 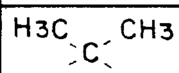 | I | SCN |
| 65 | $C_5H_{11}$ | $C_5H_{11}$ | XVI | 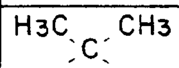 | III | SCN |

# F I G. 50

| COMPOUND NO. | R | $R^{(1)}$ | ---A--- | --- B--- | -(T)= | X |
|---|---|---|---|---|---|---|
| 72 | $CH_3$ | $CH_3$ | IV | 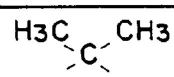 | I | I |
| 73 | $C_2H_5$ | $C_2H_5$ | IV | 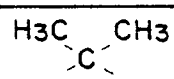 | I | I |
| 74 | $C_3H_7$ | $C_3H_7$ | IV | 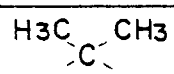 | I | $ClO_4$ |
| 75 | $C_5H_{11}$ | $C_5H_{11}$ | IV | 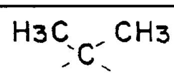 | I | $ClO_4$ |
| 76 | $(CH_2)_3SO_3H$ | $(CH_2)_3SO_3H$ | IV | 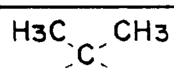 | I | $ClO_4$ |

# FIG. 51

| COMPOUND NO. | C/N VALUE |
|---|---|
| 55 | 52 |
| 56 | 51 |
| 57 | 53 |
| 58 | 52 |
| 59 | 50 |
| 60 | 52 |
| 61 | 51 |
| 62 | 49 |
| 63 | 51 |
| 64 | 50 |
| 65 | 47 |

# FIG. 52

| COMPOUND NO. | C/N VALUE |
|---|---|
| 72 | 42 |
| 73 | 44 |
| 74 | 43 |
| 75 | 41 |
| 76 | 40 |